(19) Europäisches Patentamt
European Patent Office
Office européen des brevets

(11) **EP 4 618 385 A1**

(12) **EUROPÄISCHE PATENTANMELDUNG**

(43) Veröffentlichungstag:
**17.09.2025   Patentblatt 2025/38**

(21) Anmeldenummer: **24162815.5**

(22) Anmeldetag: **12.03.2024**

(51) Internationale Patentklassifikation (IPC):
**H02M 1/00** (2006.01)   **H02M 1/42** (2007.01)
**H02M 7/487** (2007.01)

(52) Gemeinsame Patentklassifikation (CPC):
**H02M 1/4216; H02M 1/0032; H02M 1/0048;**
H02M 1/0035; H02M 7/487

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Diehl AKO Stiftung & Co. KG
88239 Wangen (DE)**

(72) Erfinder: **Schneiderhan, Simon
88289 Waldburg (DE)**

(74) Vertreter: **Diehl Patentabteilung
c/o Diehl Stiftung & Co. KG
Stephanstraße 49
90478 Nürnberg (DE)**

(54) **STROMRICHTER UND VERFAHREN**

(57)   Offenbart wird ein mehrphasiger Stromrichter (100) und ein Verfahren zum Betreiben eines mehrphasigen Stromrichters (100), wobei der Stromrichter (100) mindestens zwei Phasen (102, 202, 302) aufweist, von denen jede Phase (102, 202, 302) ansteuerbar ist zum Aufnehmen von elektrischer Energie von einer Energiequelle (104), das Verfahren aufweisend: gleichzeitiges Ansteuern von nur jeweils einer einzigen Phase (102, 202, 302) der mindestens zwei Phasen (102, 202, 302) des Stromrichters (100) zum Aufnehmen von elektrischer Energie von der Energiequelle (104). Ferner wird ein entsprechendes Computerprogrammprodukt offenbart.

Fig. 1

**Beschreibung**

TECHNISCHES GEBIET

Die vorliegende Offenbarung betrifft das Gebiet der Stromrichter.

HINTERGRUND

Aus der Praxis sind dreiphasige Frequenzumrichter mit aktiver Leistungsfaktorkorrektur bekannt, wobei die drei Phasen gleichzeitig und kontinuierlich angesteuert werden.

ZUSAMMENFASSUNG

Angesichts der oben beschriebenen Situation kann es ein Bedürfnis geben für eine Technik, welche es erlaubt, einen Stromrichter (engl. power converter) bereitzustellen, welcher insbesondere in einem Teillastbereich verbesserte Charakteristika aufweist.

Diesem Bedürfnis kann durch die unabhängigen Ansprüche Rechnung getragen werden. Einige vorteilhafte Ausführungsformen sind in den abhängigen Ansprüchen angegeben.

Gemäß einem ersten Aspekt der hierin offenbarten Gegenstände wird ein Verfahren zum Betreiben eines mehrphasigen Stromrichters bereitgestellt.

Gemäß einer Ausführungsform des ersten Aspektes wird ein Verfahren zum Betreiben eines mehrphasigen Stromrichters bereitgestellt, wobei der Stromrichter mindestens zwei Phasen aufweist, von denen jede Phase ansteuerbar ist zum Aufnehmen von elektrischer Energie von einer Energiequelle, das Verfahren aufweisend: gleichzeitiges Ansteuern von nur jeweils einer einzigen Phase des Stromrichters zum Aufnehmen elektrischer Energie von der Energiequelle.

Gemäß einem zweiten Aspekt der hierin offenbarten Gegenstände wird ein Stromrichter bereitgestellt.

Gemäß einer Ausführungsform des zweiten Aspektes wird ein Stromrichter bereitgestellt, der Stromrichter aufweisend: mindestens zwei Phasen, von denen jede ansteuerbar ist zum Aufnehmen elektrischer Energie von einer Energiequelle; und eine Steuervorrichtung, welche konfiguriert ist, um in einem ersten Betriebsmodus nur jeweils eine einzige Phase des Stromrichters zum Aufnehmen elektrischer Energie von der Energiequelle gleichzeitig anzusteuern.

Gemäß einem dritten Aspekt der hierin offenbarten Gegenstände wird ein Computerprogrammprodukt bereitgestellt.

Gemäß einer Ausführungsform des dritten Aspektes wird ein Computerprogrammprodukt bereitgestellt, das Computerprogrammprodukt aufweisend ein Programmelement, welches konfiguriert ist, um, wenn es auf einer Prozessorvorrichtung ausgeführt wird, ein Verfahren gemäß dem ersten Aspekt zu steuern.

BESCHREIBUNG EXEMPLARISCHER AUSFÜHRUNGSFORMEN

Auch wenn hierin bestimmte Nachteile früherer Technologien erwähnt werden, soll der beanspruchte Gegenstand nicht auf Implementierungen beschränkt werden, die einige oder alle der erwähnten Nachteile der früheren Technologien beheben. Ferner soll, auch wenn bestimmte Vorteile der hierin offenbarten Gegenstände in der vorliegenden Offenbarung erwähnt oder impliziert werden, der beanspruchte Gegenstand nicht auf Implementierungen beschränkt werden, die einige oder alle dieser Vorteile aufweisen.

Im Folgenden werden exemplarische Ausführungsformen der hierin offenbarten Gegenstände beschrieben, wobei beispielsweise auf ein Verfahren zum Betreiben eines Stromrichters, einen Stromrichter oder ein Computerprogrammprodukt Bezug genommen wird. Es sollte hervorgehoben werden, dass natürlich jede Kombination von Merkmalen verschiedener Aspekte, Ausführungsformen und Beispiele möglich ist. Insbesondere werden einige Ausführungsformen mit Bezug auf ein Verfahren beschrieben, während andere Ausführungsformen mit Bezug auf eine Vorrichtung beschrieben werden. Wiederum andere Ausführungsformen werden mit Bezug auf ein Computerprogrammprodukt beschrieben, während andere Ausführungsformen mit Bezug auf eine Steuervorrichtung zum Interagieren mit Elementen des Stromrichters beschrieben werden. Jedoch wird der Fachmann der vorstehenden und der nachfolgenden Beschreibung, den Ansprüchen und den Zeichnungen entnehmen, dass, solange es nicht anders angegeben ist, Merkmale verschiedener Aspekte, Ausführungsformen und Beispiele kombinierbar sind und solche Kombinationen von Merkmalen als durch diese Anmeldung offenbart anzusehen sind. Beispielsweise ist selbst ein Merkmal, welches sich auf ein Verfahren bezieht, mit einem Merkmal kombinierbar, welches sich auf eine Vorrichtung bezieht, und umgekehrt.

Gemäß einer Ausführungsform ist ein Verfahren gemäß dem ersten Aspekt ein Verfahren zum Betreiben eines mehrphasigen Stromrichters. Der mehrphasige Stromrichter weist gemäß einer Ausführungsform mindestens zwei Phasen auf, von denen jede Phase ansteuerbar ist zum Aufnehmen von elektrischer Energie von einer Energiequelle.

Ein Aufnehmen von elektrischer Energie von einer Energiequelle entspricht allgemein einem Aufnehmen von elektrischer Energie durch die (betreffende) Phase des Stromrichters.

Im Rahmen der vorliegenden Offenbarung ist ein Ansteuern einer Phase stets ein Ansteuern einer Phase zum Aufnehmen von elektrischer Energie von der Energiequelle. Gemäß einer Ausführungsform ist eine Phase des Stromrichters folglich ein Teil (insbesondere ein Schaltungsteil) des Stromrichters, welcher zur Aufnahme von Energie von einer entsprechenden Phase der Energiequelle konfiguriert ist. Beispielsweise ist gemäß einer Ausführungsform die Energiequelle ein Stromnetz, beispielsweise ein dreiphasiges Stromnetz. Beispielsweise ist jede Phase des Stromrichters zum Aufnehmen von Energie von einer zugeordneten Phase des Stromnetzes konfiguriert. Gemäß einer weiteren Ausführungsform ist der mehrphasige Stromrichter ein dreiphasiger Stromrichter. Entsprechend weist der Stromrichter gemäß einer Ausführungsform drei Phasen auf (d. h. die mindestens zwei Phasen sind drei Phasen).

Gemäß einer Ausführungsform weist das Verfahren gemäß dem ersten Aspekt ein gleichzeitiges Ansteuern von nur einer einzigen Phase des Stromrichters zum Aufnehmen von elektrischer Energie von der Energiequelle auf (hierin auch als Ein-Phasen-Betrieb bezeichnet). Beispielsweise wird bei einem dreiphasigen Stromrichter gemäß einer Ausführungsform nur jeweils eine einzige Phase gleichzeitig angesteuert.

Gemäß einer Ausführungsform weist einen Stromrichter gemäß dem zweiten Aspekt mindestens zwei Phasen auf, von denen jede ansteuerbar ist zum Aufnehmen von elektrischer Energie von einer Energiequelle. Gemäß einer weiteren Ausführungsform weist der Stromrichter eine Steuervorrichtung auf, welche konfiguriert ist, um in einem ersten Betriebsmodus nur jeweils eine einzige Phase des Stromrichters zum Aufnehmen elektrischer Energie von der Energiequelle gleichzeitig anzusteuern.

Gemäß einer Ausführungsform weist ein Computerprogrammprodukt gemäß dem dritten Aspekt ein Programmelement auf, welches konfiguriert ist, um auf einer Prozessorvorrichtung ausgeführt zu werden. Gemäß einer Ausführungsform ist das Programmelement konfiguriert, um, wenn es auf einer Prozessorvorrichtung ausgeführt wird, ein Verfahren gemäß dem ersten Aspekt zu steuern. Beispielsweise ist gemäß einer Ausführungsform das Programmelement konfiguriert, um, wenn es auf einer Prozessorvorrichtung ausgeführt wird, ein Verfahren zum Betreiben eines mehrphasigen Stromrichters zu steuern, wobei der Stromrichter mindestens zwei Phasen aufweist, von denen jede Phase ansteuerbar ist zum Aufnehmen elektrischer Energie von einer Energiequelle, und wobei das Verfahren ein gleichzeitiges Ansteuern von nur jeweils einer einzigen Phase des Stromrichters zum Aufnehmen elektrischer Energie von der Energiequelle aufweist.

Mindestens einige der Aspekte und Ausführungsformen der hierin offenbarten Gegenstände basieren auf der Idee, dass eine Effizienz des Stromrichters gesteigert werden kann, indem Schaltzyklen von Schaltern des Stromrichters eingespart werden. Beispielsweise ist es durch das gleichzeitige Ansteuern von nur einer einzigen Phasen eines Stromrichters möglich, Schaltzyklen der übrigen Phasen des Stromrichters einzusparen. Beispielsweise können in grober Näherung bei einem dreiphasigen Stromrichter gemäß Ausführungsformen der hierin offenbarten Gegenstände die Schaltverluste beim Ansteuern von nur einer einzigen Phase im Vergleich zum kontinuierlichen Ansteuern aller drei Phasen auf ein Drittel reduziert werden.

Beispielhafte Implementierungen der hierin offenbarten Gegenstände umfassen insbesondere die vorstehend und nachfolgend beschriebenen Ausführungsformen und Kombinationen von Ausführungsformen.

Im Rahmen der vorliegenden Offenbarung ist ein Stromrichter eine Vorrichtung zum Aufnehmen elektrischer Energie und Abgeben elektrischer Energie mit veränderten Charakteristika, beispielsweise mit veränderter Spannung, Stromstärke, Frequenz, etc. Gemäß einer Ausführungsform ist der Stromrichter ein Gleichrichter. Gemäß einer weiteren Ausführungsform ist der Stromrichter ein Gleichrichter eines Frequenzumrichters. Allgemein kann der Stromrichter ein Frequenzumrichter sein.

Gemäß einer Ausführungsform wird nur jeweils eine einzige Phase der mindestens zwei Phasen des Stromrichters gleichzeitig angesteuert zum Aufnehmen von elektrischer Energie von der Energiequelle. Durch das (gleichzeitige) Ansteuern von nur einer einzigen Phase kann die Anzahl an Schaltzyklen reduziert oder sogar minimiert werden.

Gemäß einer Ausführungsform weisen die mindestens zwei Phasen des Stromrichters eine erste Phase und eine zweite Phase auf, wobei das Verfahren ferner aufweist: Betreiben des Stromrichters in einem ersten Betriebsmodus, welcher ein erstes Zeitintervall und ein zweites Zeitintervall umfasst; Ansteuern von nur der ersten Phase während des ersten Zeitintervalls; und Ansteuern von nur der zweiten Phase während des zweiten Zeitintervalls.

Gemäß einer weiteren Ausführungsform weisen die mindestens zwei Phasen des Stromrichters eine dritte Phase auf, wobei der erste Betriebsmodus ein drittes Zeitintervall umfasst und das Verfahren ferner ein Ansteuern von nur der dritten Phase während des dritten Zeitintervalls umfasst. Es versteht sich, dass das erste Zeitintervall, das zweite Zeitintervall und das dritte Zeitintervall hierbei nicht überlappen.

Gemäß einer Ausführungsform umfasst das Verfahren einen Betrieb in einem zweiten Betriebsmodus; wobei in dem zweiten Betriebsmodus zwei oder mehr Phasen des Stromrichters gleichzeitig zum Aufnehmen elektrischer Energie von der Energiequelle angesteuert werden. Beispielsweise können gemäß einer Ausführungsform in dem zweiten Betriebsmodus zwei Phasen des Stromrichters gleichzeitig zum Aufnehmen elektrischer Energie von der Energiequelle angesteuert werden. Gemäß einer weiteren Ausführungsform werden in dem zweiten Betriebsmodus alle Phasen des Stromrichters gleichzeitig angesteuert.

Gemäß einer Ausführungsform nimmt der Stromrichter in dem ersten Betriebsmodus eine erste elektrische Leistung von der Energiequelle auf und nimmt in dem zweiten Betriebsmodus eine zweite elektrische Leistung von der Energiequelle auf, wobei die erste elektrische Leistung kleiner als die zweite elektrische Leistung ist. Mit anderen Worten ist gemäß einer Ausführungsform in dem ersten Betriebsmodus die Last des Stromrichters geringer als in dem zweiten Betriebsmodus. Die Lastgrenze, bei welcher der Stromrichter (z.B. die Steuervorrichtung des Stromrichters) zwischen dem ersten Betriebsmodus und dem zweiten Betriebsmodus umschaltet, kann beispielsweise abhängig von einem Effizienzgewinn und oder einem Strom-Oberwellenanteil (beispielsweise im Verhältnis zum Anteil bei der Grundfrequenz) gewählt werden.

Gemäß einer Ausführungsform wird der erste Betriebsmodus in einem Teillastbetrieb des Stromrichters angewendet. Beispielsweise ist die Steuervorrichtung konfiguriert, um den ersten Betriebsmodus in einem Teillastbetrieb des Stromrichters einzustellen. Beispielsweise ist die Steuervorrichtung gemäß einer Ausführungsform konfiguriert, um bei einer Leistungsaufnahme, die in kleiner oder gleich einem vorbestimmten Leistungsschwellwert ist, den ersten Betriebsmodus einzustellen (bzw. in dem ersten Betriebsmodus zu arbeiten). Gemäß einer Ausführungsform ist der vorbestimmte Leistungsschwellwert 40 % einer Nennleistung des Stromrichters. Gemäß einer weiteren Ausführungsform ist der vorbestimmte Leistungsschwellwert 25 % einer Nennleistung des Stromrichters. Mit anderen Worten ist die Steuervorrichtung gemäß einer Ausführungsform konfiguriert, um bei einer Leistungsaufnahme, die bei 25 % der Nennleistung des Stromrichters oder darunter liegt, den ersten Betriebsmodus einzustellen. Gemäß einer weiteren Ausführungsform ist der vorbestimmte Leistungsschwellwert 18 % einer Nennleistung des Stromrichters.

Der zweite Betriebsmodus kann gemäß einer Ausführungsform einen Volllastbetrieb des Stromrichters umfassen bzw. für einen Volllastbetrieb des Stromrichters geeignet sein. Beispielsweise kann vorgesehen sein, dass in dem zweiten Betriebsmodus alle Phasen der mindestens zwei Phasen des Stromrichters gleichzeitig zum Aufnehmen elektrischer Energie von der Energiequelle angesteuert werden. Beispielsweise ist die Steuervorrichtung gemäß einer Ausführungsform konfiguriert, um bei einer Leistungsaufnahme, die größer als der vorbestimmte Leistungsschwellwert ist, den zweiten Betriebsmodus einzustellen (bzw. in dem zweiten Betriebsmodus zu arbeiten).

Gemäß einer Ausführungsform kann vorgesehen sein, dass in dem zweiten Betriebsmodus zwei oder mehr Phasen des Stromrichters gleichzeitig zum Aufnehmen elektrischer Energie von der Energiequelle angesteuert werden. Beispielsweise können bei einem dreiphasigen Stromrichter in dem zweiten Betriebsmodus alle drei Phasen des Stromrichters gleichzeitig zum Aufnehmen elektrischer Energie von der Energiequelle angesteuert werden.

Gemäß einer weiteren Ausführungsform kann vorgesehen sein, dass in dem zweiten Betriebsmodus nur ein Teil der Phasen des Stromrichters gleichzeitig zum Aufnehmen elektrischer Energie von der Energiequelle angesteuert werden. Beispielsweise können, gemäß einer Ausführungsform, bei einem dreiphasigen Stromrichter in dem zweiten Betriebsmodus nur zwei Phasen des Stromrichters gleichzeitig zum Aufnehmen elektrischer Energie von der Energiequelle angesteuert werden. Insbesondere in diesem Fall kann gemäß einer Ausführungsform ein dritter Betriebsmodus vorgesehen sein, in welchem alle Phasen des Stromrichters (beispielsweise drei Phasen bei einem dreiphasigen Stromrichter) gleichzeitig zum Aufnehmen elektrischer Energie von der Energiequelle angesteuert werden.

Gemäß einer Ausführungsform erfolgt das Ansteuern der mindestens zwei Phasen des Stromrichters derart, dass in jeder angesteuerten Phase für eine Halbwelle einer an der Phase anliegenden Spannung (auch als Phasenspannung bezeichnet) zwei Halbwellen eines Stromes erzeugt werden. Gemäß einer weiteren Ausführungsform wird von den zwei Halbwellen des Stromes eine erste Halbwelle durch das Ansteuern der betreffenden Phase erzeugt und eine zweite Halbwelle durch ein Ansteuern einer anderen der mindestens zwei Phasen erzeugt. Gemäß einer Ausführungsform wird die zweite Stromhalbwelle durch einen Rückstrom verursacht, der durch das Ansteuern der anderen der mindestens zwei Phasen des Stromrichters in der einen Phase (d. h. in dem Beispiel in der ersten Phase) erzeugt wird. Die erste Halbwelle wird hierin auch als erste Stromhalbwelle bezeichnet und die zweite Halbwelle als zweite Stromhalbwelle.

Mit anderen Worten weist gemäß einer Ausführungsform in einer Phase (beispielsweise in einer ersten Phase) des Stromrichters die Phasenspannung eine Halbwelle auf und der Phasenstrom in dieser Phase (d. h., in dem Beispiel in der ersten Phase) weist zwei Halbwellen auf. Gemäß einer Ausführungsform sind die zwei Halbwellen des Stromes von gleicher Polarität.

Gemäß einer Ausführungsform sind die erste Stromhalbwelle und die zweite Stromhalbwelle einer Phase symmetrisch zu einer Halbwelle der Phasenspannung der Phase.

Gemäß einer Ausführungsform ist die erste Stromhalbwelle mit einer Halbwelle einer Dreieckspannung (Spannung zwischen zwei Phasen synchronisiert (Phasenwinkel null), wobei dann naturgemäß die zweite Stromhalbwelle mit der Halbwelle der Dreieckspannung außer Phase ist.

Gemäß einer Ausführungsform ist die Frequenz des Referenzstromes $f_R$ (hierin auch als Stromreferenzsignal bezeichnet) dreimal so hoch wie die Frequenz der Phasenspannung $f_U$ ($f_R = 3^* f_U$). Es wird angemerkt, dass gemäß einer Ausführungsform die Phasenströme zwar entsprechend dem Referenzstrom, jedoch abwechselnd in den mindestens zwei Phasen erzeugt werden, so dass der eine Fourieranalyse des Phasenstromes in einer der Phasen sich von einer Fourieranalyse des Referenzstromes unterscheidet.

Gemäß einer Ausführungsform wird während des Aufnehmen elektrischer Energie von der Energiequelle eine Leistungsfaktorkorrektur (engl. Power Factor Correction, PFC) vorgenommen. Beispielsweise ist der Stromrichter gemäß einer Ausführungsform ein Gleichrichter in NPFC-Topologie ("Neutral Boost Power Factor Correction"-Topologie). Gemäß einer weiteren Ausführungsform ist der Stromrichter ein Gleichrichter in ANPFC-Topologie ("Advanced Neutral Boost Power Factor Correction"-Topologie). Typische Anwendungen dieser Topologien sind beispielsweise Heizungsanlagen, Lüftungsanlagen und Klimaanlagen, d. h. der HVAC-Bereich (Heating, Ventilation, Air Conditioning).

Allgemein ist es ein Ziel der Leistungsfaktorkorrektur, einen Leistungsfaktor $\lambda$ möglichst nahe an 1 zu erreichen. D. h. ein Ziel ist es, zu erreichen, dass in jeder Phase des Stromrichters die an der Phase anliegende Spannung und der durch die Phase aufgenommene Strom einen Phasenwinkel von ungefähr 0 ° haben (d.h. in Phase sind) und der Strom einen möglichst geringen Oberwellengehalt aufweist. Beispielsweise sind in Deutschland die Anforderungen an den Oberwellengehalt des Netzstroms durch die DIN EN 61000-3-2 geregelt. Ausführungsformen der hierin offenbarten Gegenstände erlauben die Einhaltung dieser Norm selbst bei einem Ansteuern von nur einer einzigen Phase der mindestens zwei Phasen des Stromrichters in einem Teillastbetrieb des Stromrichters gemäß Ausführungsformen der hierin offenbarten Gegenstände. Dass der Leistungsfaktor hierbei möglicherweise von 1 abweicht (beispielsweise ist gemäß einer Ausführungsform der Leistungsfaktor im Ein-Phasen-Betrieb größer oder gleich 0,8 ($\lambda \geq 0{,}8$)), ist jedenfalls für einige Anwendungen akzeptabel.

Gemäß einer Ausführungsform weist jede Phase des Stromrichters eine Schaltvorrichtung auf, wobei durch geeignete Steuerung der Schaltvorrichtung eine Leistungsfaktorkorrektur erzielt wird. Gemäß einer Ausführungsform weist die Schaltvorrichtung mindestens einen Halbleiterschalter auf. Beispielsweise weist gemäß einer Ausführungsform die Schaltvorrichtung jeder Phase zwei Halbleiterschalter auf. Gemäß einer Ausführungsform ist jeder der zwei Halbleiterschalter einer Phase zum Sperren einer Stromrichtung vorgesehen.

Gemäß einer Ausführungsform erfolgt das Ansteuern der betreffenden Phase des Stromrichters durch Pulsweitenmodulation einer Schaltvorrichtung der Phase. Gemäß einer Ausführungsform erfolgt die Pulsweitenmodulation unter Verwendung eines Referenzsignals für den zu erzeugenden Strom (hierin auch als Stromreferenzsignal bezeichnet). Beispielsweise bestimmt gemäß einer Ausführungsform das Stromreferenzsignal die relative Einschaltdauer der Schaltvorrichtung oder eines Halbleiterschalters der Schaltvorrichtung. Die relative Einschaltdauer wird auch als Tastverhältnis (engl. duty cycle) bezeichnet. Gemäß einer weiteren Ausführungsform erfolgt das Ansteuern einer Phase (der Stromrichters) mit einer Frequenz, die höher ist als eine Grundfrequenz einer an der Phase anliegenden Spannung. Gemäß einer weiteren Ausführungsform erfolgt das Ansteuern einer Phase mit einer Frequenz, die höher ist als eine Grundfrequenz der Energiequelle.

Gemäß einer Ausführungsform wird nur jeweils eine einzige Phase der mindestens zwei Phasen des Stromrichters zum Aufnehmen von elektrischer Energie von der Energiequelle angesteuert, wobei das Ansteuern der betreffenden Phase (bzw. der betreffenden Phasen) innerhalb von vorbestimmten Zeitintervallen erfolgt. Gemäß einer Ausführungsform ist das Ansteuern einer Phase ein Ansteuern einer Schaltvorrichtung der Phase mit einem Pulsweitenmodulations-Signal (PWM-Signal). Gemäß einer Ausführungsform ist das betreffende Zeitintervall, in welchem eine Phase angesteuert wird, ein Zeitintervall, welches einem Sektor einer Spannungsperiode der Phasenspannung (Eingangsspannung, die von der Energiequelle geliefert wird) entspricht.

Gemäß einer Ausführungsform wird die Spannungsperiode der Energiequelle in mehrere Sektoren aufgeteilt, wobei in jedem Sektor eine der mindestens zwei Phasen eine Spannung (bezogen auf Erde) aufweist, die größer ist als die Spannung in den übrigen Phasen. Beispielsweise bei einer dreiphasigen Energiequelle (beispielsweise einem dreiphasigen Stromnetz) bzw. einem dreiphasigen Stromrichter werden die Spannungen einer Phase gegenüber Masse auch als Sternspannungen bezeichnet. Diese Sternspannungen sind üblicherweise gegeneinander um 2/3 pi phasenverschoben. Pi (auch mit dem griechischen Buchstaben $\pi$ bezeichnet) ist hier die Kreiszahl, pi = 3,14159.... Im Fall von drei Phasen gibt es folglich sechs Sektoren, wobei beispielsweise in einem ersten Sektor eine erste Sternspannung $U_{L1}$ größer ist als eine zweite Sternspannung $U_{L2}$, die wiederum größer ist als eine dritte Sternspannung $U_{L3}$ ($U_{L1} > U_{L2} > U_{L3}$). Ein zweiter Sektor wäre analog dadurch definiert, dass die erste Sternspannung $U_{L1}$ größer ist als die dritte Sternspannung $U_{L3}$, die wiederum größer ist als die zweite Sternspannung $U_{L2}$ ($U_{L1} > U_{L3} > U_{L2}$).

Gemäß einer Ausführungsform wird das Stromreferenzsignal in Abhängigkeit der Spannung zwischen zwei Phasen (hierin auch als Dreieckspannung bezeichnet) erzeugt. Beispielsweise wird gemäß einer Ausführungsform aus den Dreieckspannungen ein erstes Signal erzeugt, dessen Grundfrequenz ein ganzzahliges Vielfaches der Frequenz der Dreieckspannungen ist. Beispielsweise für eine dreiphasige Energiequelle (beispielsweise das Stromnetz) ist die Grundfrequenz des ersten Signals dreimal so hoch wie die Frequenz der Dreieckspannungen (Spannungen zwischen jeweils zwei der drei Phasen). Gemäß einer Ausführungsform weist das erste Signal abwechselnd ansteigende und abfallende Flanken auf, wobei die ansteigende Flanke eine erste mittlere Steigung aufweist und die abfallende Flanke eine zweite mittlere Steigung aufweist, die gemäß einer Ausführungsform der Kehrwert der ersten mittleren Steigung ist. Gemäß einer Ausführungsform ist die ansteigende Flanke eine lineare ansteigende Flanke. Gemäß einer weiteren Ausführungsform ist die ansteigende Flanke durch einen Abschnitt einer Sinuswelle gebildet. Gemäß einer weiteren Ausführungsform ist die abfallende Flanke eine linear abfallende Flanke. Gemäß einer weiteren Ausführungsform ist die abfallende Flanke durch einen Abschnitt einer Sinuswelle gebildet. Gemäß einer Ausführungsform ist die Signalform des ersten Signals allgemein dreieckförmig.

Gemäß einer Ausführungsform wird aus dem Dreiecksignal durch Limitierung (insbesondere durch Limitierung auf einen vorbestimmten maximalen Spannungswert) ein zweites Signal erzeugt. Gemäß einer Ausführungsform weist das zweite Signal eine ansteigende Flanke, eine abfallende Flanke und einen Verbindungsabschnitt zwischen der ansteigenden und der abfallenden Flanke auf. Gemäß einer Ausführungsform ist der Verbindungabschnitt linear. Gemäß einer weiteren Ausführungsform ist das zweite Signal allgemein trapezförmig. Gemäß einer Ausführungsform wird das Stromreferenzsignal in Abhängigkeit des zweiten Signals und einer Stellgröße eines Zwischenkreis-Spannungsreglers (d. h. des Regler, welcher die Spannung am Ausgang des Gleichrichters regelt) erzeugt. Beispielsweise wird gemäß einer Ausführungsform das Stromreferenzsignal durch Multiplikation des zweiten Signals mit der Stellgröße des Zwischenkreis-Spannungsreglers erzeugt.

Analog zu den Sternspannungen erlauben auch die Dreieckspannungen eine Unterteilung in Sektoren, wobei gemäß einer Ausführungsform in jedem Sektor eine der Dreieckspannungen einen Spannungswert aufweist, die größer ist als die übrigen Dreieckspannungen. Im Einklang mit einer Ausführungsform resultiert dies für einen dreiphasigen Stromrichter in sechs Sektoren, wobei beispielsweise in einem ersten Sektor eine erste Dreieckspannung $U_{L1L2}$ größer ist als eine zweite Dreieckspannung $U_{L3L1}$, die wiederum größer ist als eine dritte Dreieckspannung $U_{L2L3}$. Hierbei bezeichnet beispielsweise die erste Dreieckspannung $U_{L1L2}$ die Spannung zwischen der ersten Phase (mit Sternspannung $U_{L1}$) und der zweiten Phase (mit Sternspannung $U_{L2}$). Analog bezeichnet die zweite Dreieckspannung $U_{L3L1}$ eine Spannung zwischen der dritten Phase (mit Sternspannung $U_{L3}$) und der ersten Phase (mit Sternspannung $U_{L1}$)) und die dritte Dreieckspannung $U_{L2L3}$ bezeichnet eine Spannung zwischen der zweiten Phase (mit Sternspannung $U_{L2}$) und der dritten Phase (mit Sternspannung $U_{L3}$).

Wie vorstehend bereits erläutert, ist gemäß einer Ausführungsform der Stromrichter ein Gleichrichter und/oder die Energiequelle ist ein Stromnetz.

Gemäß einer Ausführungsform ist die Steuervorrichtung des Stromrichters konfiguriert, um hierin beschriebene Ausführungsformen zu implementieren, beispielsweise um mindestens eines von dem ersten Signal, dem zweiten Signal, dem Stromreferenzsignal, Zeitintervallen, Sektoren, den Zwischenkreisspannungsregler oder andere Komponenten, Signale, Spannungen und Ströme, wie sie hierin beschrieben sind, zu implementieren bzw. zu erzeugen.

Beispielsweise weist wie beschrieben in einer Ausführungsform jede Phase des Stromrichters eine Schaltvorrichtung auf, welche ansteuerbar ist, um elektrische Energie von der Energiequelle in die betreffende Phase des Stromrichters aufzunehmen (beispielsweise um die betreffende Phase mit einem Zwischenkreis des Stromrichters zu koppeln), wobei gemäß einer Ausführungsform die Steuervorrichtung betreibbar ist, um das Ansteuern von einer der Phasen des Stromrichters durch ein Ansteuern der Schaltvorrichtung der betreffenden Phase durchzuführen.

Ferner ist beispielsweise in einer Ausführungsform der Stromrichter in einem zweiten Betriebsmodus betreibbar, wobei die Steuervorrichtung konfiguriert ist, um in dem zweiten Betriebsmodus zwei oder mehr Phasen des Stromrichters gleichzeitig zum Aufnehmen elektrischer Energie von der Energiequelle anzusteuern.

Ferner umfasst beispielsweise gemäß einer Ausführungsform der erste Betriebsmodus ein erstes Zeitintervall und ein zweites Zeitintervall, wobei der Stromrichter eine erste Phase und eine zweite Phase aufweist, und wobei die Steuervorrichtung in dem ersten Zeitintervall nur die erste Phase des Stromrichters zum Aufnehmen elektrischer Energie von der Energiequelle ansteuert; und die Steuervorrichtung in dem zweiten Zeitintervall nur die zweite Phase des Stromrichters zum Aufnehmen elektrischer Energie von der Energiequelle ansteuert.

Ferner weist gemäß einer Ausführungsform der Stromrichter mindestens eines der folgenden Merkmale auf: der Stromrichter arbeitet in dem ersten Betriebsmodus in einem Teillastbetrieb; der Stromrichter ist ein dreiphasiger Frequenzumrichter mit aktiver Leistungsfaktorkorrektur.

Gemäß einer Ausführungsform weist die Steuervorrichtung eine Prozessorvorrichtung und eine Speichervorrichtung auf, wobei die Speichervorrichtung ein Computerprogrammprodukt gemäß Ausführungsformen der hierin offenbarten Gegenstände aufweist, insbesondere ein Computerprogrammprodukt aufweisend ein Programmelement, welches konfiguriert ist, um, wenn es auf der Prozessorvorrichtung ausgeführt wird, ein Verfahren zu steuern, wie es hierin beschrieben ist.

Nachdem gemäß Ausführungsformen des hierin offenbarten Verfahrens zum Betreiben eines mehrphasigen Stromrichters Schaltvorrichtungen des Stromrichters moduliert werden, kann das Verfahren gemäß einer Ausführungsform auch als Modulationsverfahren für einen mehrphasigen Stromrichter bezeichnet werden.

Gemäß Ausführungsformen des ersten Aspektes ist das Verfahren eingerichtet zum Liefern der Funktionalität von einem oder mehreren der hierin offenbarten Ausführungsformen und/oder zum Liefern der Funktionalität, wie sie erforderlich ist für eine oder mehrere der hierin offenbarten Ausführungsformen, insbesondere der Ausführungsformen des ersten Aspektes, des zweiten Aspektes und/oder des dritten Aspektes.

Gemäß Ausführungsformen des zweiten Aspektes ist der Stromrichter eingerichtet zum Liefern der Funktionalität von einem oder mehreren der hierin offenbarten Ausführungsformen und/oder zum Liefern der Funktionalität, wie sie erforderlich ist für eine oder mehrere der hierin offenbarten Ausführungsformen, insbesondere der Ausführungsformen des ersten Aspektes, des zweiten Aspektes und/oder des dritten Aspektes.

Gemäß Ausführungsformen des zweiten Aspektes ist die Steuervorrichtung eingerichtet zum Liefern der Funktionalität von einem oder mehreren der hierin offenbarten Ausführungsformen und/oder zum Liefern der Funktionalität, wie sie erforderlich ist für eine oder mehrere der hierin offenbarten Ausführungsformen, insbesondere der Ausführungsformen des ersten Aspektes, des zweiten Aspektes und/oder des dritten Aspektes.

Gemäß Ausführungsformen des dritten Aspektes ist das Computerprogrammprodukt eingerichtet zum Liefern der Funktionalität von einem oder mehreren der hierin offenbarten Ausführungsformen und/oder zum Liefern der Funktionalität, wie sie erforderlich ist für eine oder mehrere der hierin offenbarten Ausführungsformen, insbesondere der Ausführungsformen des ersten Aspektes, des zweiten Aspektes und/oder des dritten Aspektes.

Es wird angemerkt, dass eine Bezugnahme auf einen Aspekt der hierin offenbarten Gegenstände selbstverständlich eine Bezugnahme auf eine oder mehrere Ausführungsformen des Aspektes umfasst. Beispielsweise umfasst die Angabe, dass ein Programmelement ein Verfahren gemäß dem ersten Aspekt steuert, Ausführungsformen, gemäß welchen das Verfahren nach einer oder mehreren Ausführungsformen des ersten Aspektes ausgebildet ist.

Gemäß einer Ausführungsform ist das Programmelement ein nicht-transientes Programmelement. Gemäß einer weiteren Ausführungsform ist das Computerprogrammprodukt ein nicht-transientes Computerprogrammprodukt.

Wie hierin verwendet wird die Bezugnahme auf ein Computerprogrammprodukt, welches ein Programmelement aufweist, als äquivalent angesehen zu einer Bezugnahme auf ein Computerprogramm, welches ein Programmelement aufweist und/oder ein computerlesbares Medium, welches ein Programmelement aufweist. Gemäß einer Ausführungsform weist das Programmelement Instruktionen zum Steuern einer Prozessorvorrichtung (mit einem oder mehreren Mikroprozessoren, beispielsweise ein Computersystem) auf, zum Bewirken und/oder Koordinieren der Ausführung von mindestens einem hierein beschriebenen Verfahren.

Das (nicht-transiente) Programmelement kann implementiert sein als computerlesbarer Instruktionscode unter Verwendung von jeder geeigneten Programmiersprache, wie beispielsweise C, C++, Assemblersprache, etc. und kann auf einem computerlesbaren Medium (entfernbare Platte, flüchtiger oder nichtflüchtiger Speicher, Embedded-Speicher/-Prozessor, etc.) gespeichert sein. Gemäß einer Ausführungsform ist der Instruktionscode ausführbar zum Programmieren eines Computers oder irgendeiner anderen programmierbaren Prozessorvorrichtung zum Ausführen der beabsichtigten Funktionen. Das Computerprogramm kann in einem Netzwerk verfügbar sein, beispielsweise dem World Wide Web, von welchem es beispielsweise heruntergeladen werden kann.

Die hierin offenbarten Gegenstände können mittels eines Computerprogrammprodukts (Programmelements) respektive Software realisiert werden. Jedoch können die hierin offenbarten Gegenstände ebenso durch einen oder mehrere spezifische elektronische Schaltungen, respektive Hardware realisiert werden. Ferner können die hierin offenbarten Gegenstände ebenso in Hybridform, d. h. In einer Kombination von Softwaremodulen und Hardwaremodulen realisiert werden.

Gemäß einer Ausführungsform können eine oder mehrere der hierin offenbarten Steuervorrichtungen eine Prozessorvorrichtung aufweisen, welche zur Ausführung eines hierin offenbarten Programmelements konfiguriert ist.

Sofern nichts anderes angegeben ist, sind Zahlenwerte und/oder Prozentangaben einschließlich eines $\pm 5$ %-Fensters zu verstehen. Beispielsweise eine Prozentangabe von 50 % umfasst gemäß einer Ausführungsform eine Prozentangabe innerhalb eines Intervalls von 50 % $\pm$ 5 % = [45 %; 55 %]. Gemäß einer weiteren Ausführungsform sind Zahlenwerte und/oder Prozentangaben einschließlich eines $\pm 10$ %-Fensters zu verstehen.

Gemäß einer Ausführungsform kann ein hierin offenbartes Verfahren die Funktionalität einer hierin offenbarten Vorrichtung definieren, ohne auf die vorrichtungsspezifischen Merkmale beschränkt zu sein. Insofern soll jede hierin offenbarte Funktionalität einer hierin offenbarten Vorrichtung implizit ein entsprechendes Verfahren offenbaren, welches ausschließlich durch die offenbarte Funktionalität definiert ist. Umgekehrt kann gemäß einer Ausführungsform ein hierin offenbartes Verfahren mit jeder geeigneten bekannten Vorrichtung (die ein einziges Element oder mehrere zusammenwirkende Elemente aufweisen kann) ausgeführt werden. Insofern soll jedes hierin offenbarte Verfahren implizit eine entsprechende Vorrichtung offenbaren, welche konfiguriert ist, um das Verfahren auszuführen.

Eine allgemeine Bezugnahme auf Ausführungsformen (beispielsweise eines Verfahrens oder eines Stromrichters), zum Beispiel durch die Formulierung "gemäß mindestens einer Ausführungsform", durch die Formulierung "gemäß einer oder mehreren Ausführungsformen" oder die Formulierung "gemäß Ausführungsformen" umfasst insbesondere auch die Merkmalskombination eines entsprechenden unabhängigen Anspruchs ohne weitere Einschränkungen (beispielsweise das gemäß Anspruch 1 oder den Stromrichter gemäß Anspruch 10).

Solange nicht ausdrücklich etwas anderes angegeben ist, definiert eine Auflistung von Merkmalen oder Prozessschritten gemäß einer Ausführungsform noch nicht eine Reihenfolge der Merkmale oder der Prozessschritte in der Reihenfolge der Auflistung. Gemäß einer weiteren Ausführungsform definiert eine Auflistung von Merkmalen oder Prozessschritten eine Reihenfolge der Merkmale oder Prozessschritte wie in der Auflistung angegeben.

Weitere Vorteile und Merkmale der vorliegenden Offenbarung ergeben sich aus der folgenden beispielhaften Beschreibung derzeit bevorzugter Ausführungsformen, auf welche die beanspruchte Erfindung jedoch nicht beschränkt ist. Die einzelnen Figuren der Zeichnungen dieses Dokuments sind lediglich als schematisch und als nicht maßstabsgetreu anzusehen.

KURZE BESCHREIBUNG DER ZEICHNUNGEN

Figur 1 zeigt eine beispielhafte Implementierung eines Stromrichters gemäß Ausführungsformen der hierin offenbarten Gegenstände.

Fig. 2 zeigt beispielhaft die gemäß einer Ausführungsform jeweils an den drei Phasen des Stromrichters aus Fig. 1 anliegende Spannung.

Fig. 3 zeigt schematisch die Phasenspannungen der einzelnen Phasen bezüglich des Neutralpunktes gemäß Ausführungsformen der hierin offenbarten Gegenstände.

Fig. 4 zeigt eine Zuordnung von Sektoren bzw. Winkelintervallen für die Ansteuerung von Halbleiterschaltern der Schaltvorrichtung jeder Phase gemäß Ausführungsformen der hierin offenbarten Gegenstände.

Fig. 5 zeigt über zwei Netzperioden Zeitintervalle, in denen eine Ansteuerung der einzelnen Phasen gemäß Ausführungsformen der hierin offenbarten Gegenstände erfolgt.

Fig. 6 zeigt ein Stromreferenzsignal gemäß Ausführungsformen der hierin offenbarten Gegenstände zusammen mit der zugehörigen Halbwelle des betreffenden Phasenstroms in den einzelnen Phasen.

Fig. 7 zeigt den zeitlichen Verlauf von Dreieckspannungen gemäß Ausführungsformen der hierin offenbarten Gegenstände.

Fig. 8 zeigt eine Definition eines Dreiecksignal für sechs Sektoren (d.h. für eine Periodendauer bzw. eine Vollwelle) gemäß Ausführungsformen der hierin offenbarten Gegenstände.

Fig. 9 zeigt die Phasenströme aus Fig. 6 gemäß einer Ausführungsform im Kontext mit den Dreieckspannungen aus Fig. 7.

Fig. 10 zeigt die Zeitintervalle für die Pulsweitenmodulation der drei Phasen aus Fig. 5 gemäß einer Ausführungsform im Kontext mit den Dreieckspannungen aus Fig. 7.

Fig. 11 veranschaulicht das Erzeugen eines Stromreferenzsignals gemäß Ausführungsformen der hierin offenbarten Gegenstände.

Fig. 12 zeigt über zwei Netzperioden Zeitintervalle, in denen eine Ansteuerung der einzelnen Phasen in einem zweiten Betriebsmodus gemäß Ausführungsformen der hierin offenbarten Gegenstände erfolgt.

Fig. 13. zeigt über zwei Netzperioden den Phasenstrom in den einzelnen Phasen in dem zweiten Betriebsmodus gemäß Ausführungsformen der hierin offenbarten Gegenstände.

DETAILLIERTE BESCHREIBUNG

Es wird angemerkt, dass in verschiedenen Figuren ähnliche oder identische Elemente oder Komponenten mit denselben Bezugszahlen versehen sind, oder mit Bezugszahlen, die sich nur in der ersten Ziffer oder einem angehängten Buchstaben unterscheiden. Solche Merkmale bzw. Komponenten, die mit den entsprechenden Merkmalen bzw. Komponenten in einer anderen Figur gleich oder zumindest funktionsgleich sind, werden nur bei ihrem ersten Auftreten in dem nachfolgenden Text detailliert beschrieben und die Beschreibung wird bei nachfolgendem Auftreten dieser Merkmale und Komponenten (bzw. der entsprechenden Bezugszahlen) nicht wiederholt.

Es versteht sich, dass eine beispielhafte Implementierung der nachfolgend beschriebenen und mit Bezugszeichen versehenen Elemente in den betreffenden Zeichnungen dargestellt und gemäß der nachfolgenden Beschreibung konfiguriert sind, sofern nicht etwas anderes angegeben ist.

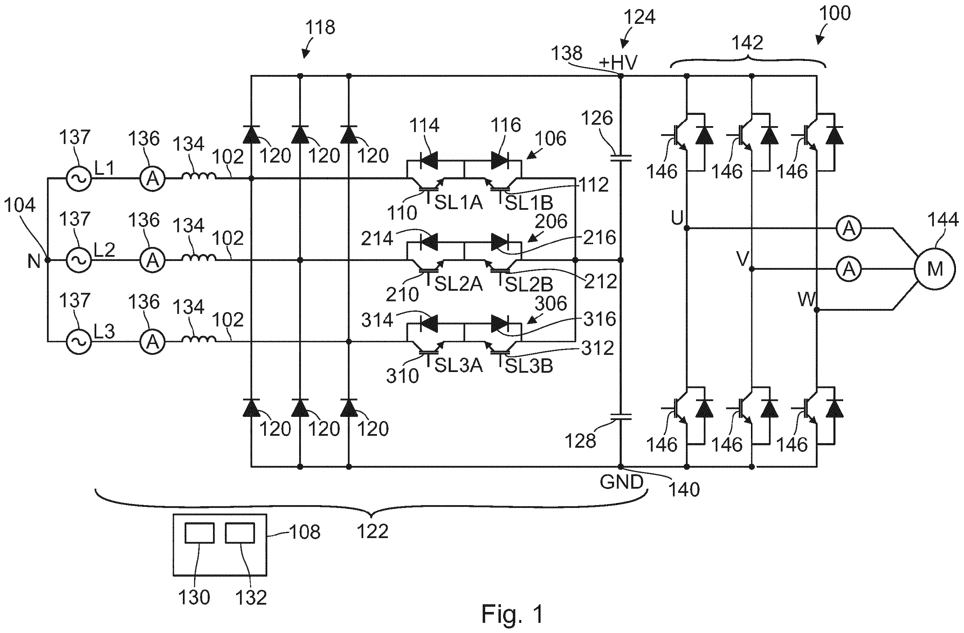

Fig. 1 zeigt eine beispielhafte Implementierung eines Stromrichters 100 gemäß Ausführungsformen der hierin offenbarten Gegenstände.

Gemäß einer Ausführungsform weist der Stromrichter 100 drei Phasen 102, 202, 302 auf, eine erste Phase 102 (auch mit L1 bezeichnet, insbesondere bei physikalischen Größen), eine zweite Phase 202 (auch mit L2 bezeichnet, insbesondere bei physikalischen Größen) und eine dritte Phase 303 (auch mit L3 bezeichnet, insbesondere bei physikalischen Größen). Gemäß einer Ausführungsform ist jede der Phasen des Stromrichters 102, 202, 302 ansteuerbar, um elektrische Energie von einer Energiequelle 104 aufzunehmen (die Phasenspannungen der Energiequelle in den drei Phasen 102, 202, 302 sind schematisch bei 137 angegeben). Gemäß einer Ausführungsform weist hierzu jede Phase 102, 202, 302 eine Schaltvorrichtung 106, 206, 306 auf, welche ansteuerbar ist, um elektrische Energie von der Energiequelle 104 in die betreffende Phase 102, 202, 302 aufzunehmen. Beispielsweise ist gemäß einer Ausführungsform eine erste Schaltvorrichtung 106 ansteuerbar, um elektrische Energie von der Energiequelle 104 in die erste Phase 102 aufzunehmen. Entsprechend ist gemäß einer Ausführungsform eine zweite Schaltvorrichtung 206 ansteuerbar, um elektrische Energie von der Energiequelle 104 in die zweite Phase 202 aufzunehmen. Ferner ist gemäß einer Ausführungsform eine dritte Schaltvorrichtung 306 ansteuerbar, um elektrische Energie von der Energiequelle 104 in die dritte Phase 302 aufzunehmen.

Gemäß einer Ausführungsform weist der Stromrichter 100 eine Steuervorrichtung 108 auf, welche betreibbar ist, um das Ansteuern der Phasen 102, 202, 302 durch ein Ansteuern der Schaltvorrichtungen 106, 206, 306 der betreffenden Phase durchzuführen. Hierzu ist die Steuervorrichtung 108 gemäß einer Ausführungsform mit den betreffenden Schaltvorrichtungen, d. h. mit der ersten Schaltvorrichtung 106, der zweiten Schaltvorrichtung 206 und der dritten Schaltvorrichtung 306 steuerungsmäßig verbunden (in Fig. 1 aus Gründen der Übersichtlichkeit nicht dargestellt).

Gemäß einer Ausführungsform weist jede Schaltvorrichtung 106, 206, 306 einen Halbleiterschalter für jede Stromrichtung (bzw. für jede über der Schaltvorrichtung anliegende Polarität) auf, beispielsweise wie in Fig. 1 dargestellt. Beispielsweise weist die erste Schaltvorrichtung 106 einen ersten Halbleiterschalter 110 auf, welcher einen Stromfluss in einer ersten Stromrichtung sperren kann und die erste Schaltvorrichtung 106 weist ferner einen zweiten Halbleiterschalter 112 auf, welcher einen Stromfluss in einer zweiten Stromrichtung, die der ersten Stromrichtung entgegengesetzt ist, sperren kann, beispielsweise wie in Fig. 1 dargestellt. Gemäß einer Ausführungsform ist zu jedem Halbleiterschalter 110, 112 eine Diode 114, 116 (mit inverser Polarität) parallel geschaltet, beispielsweise wie in Fig. 1 dargestellt. Die parallelgeschaltete Diode 114, 116 kann in bekannter Weise durch den Aufbau des Halbleiterschalters bedingt sein, beispielsweise dadurch, dass bei einem Feldeffekttransistor Source mit Bulk verbunden wird. Gemäß einer Ausführungsform sind die Schaltvorrichtungen 106, 206, 306 jeder Phase 102, 202, 302 analog aufgebaut, beispielsweise wie in Fig. 1 dargestellt. Dementsprechend weist gemäß einer Ausführungsform die zweite Schaltvorrichtung 206 einen ersten Halbleiterschalter 210 und einen zweiten Halbleiterschalter 212 auf, welchen jeweils eine Diode 214, 216 parallel geschaltet ist, beispielsweise wie in Fig. 1 dargestellt. Entsprechend weist gemäß einer Ausführungsform die dritte Schaltvorrichtung 306 einen ersten Halbleiterschalter 310 und einen zweiten Halbleiterschalter 312 auf, denen jeweils eine Diode 314, 316 parallel geschaltet ist, beispielsweise wie in Fig. 1 dargestellt.

Durch geeignete Ansteuerung der Schaltvorrichtungen 106, 206, 306 durch die Steuervorrichtung 108 wird eine aktive Leistungsfaktorkorrektur und ein geringer Oberwellenanteil (insbesondere in den zweiten und höheren Oberwellen) in den Phasenströmen ermöglicht.

Die beiden Halbleiterschalter 110, 112 der ersten Phase 102 werden hierin auch mit SL1A und SL1B bezeichnet. Analog werden die beiden Halbleiterschalter 210, 212 der zweiten Phase 202 hierin auch mit SL2A und SL2B bezeichnet. Analog werden die beiden Halbleiterschalter 310, 312 der dritten Phase 302 auch mit SL3A und SL3B bezeichnet.

Gemäß einer Ausführungsform bilden Teile des Stromrichters 100 einen Gleichrichter 122, welcher einen Zwischenkreis 124 des Stromrichters 100 speist, beispielsweise wie in Fig. 1 dargestellt. Gemäß einer Ausführungsform weist der Gleichrichter 122 ferner eine Brückenschaltung 118 auf, beispielsweise eine Sechs-Puls-Brückenschaltung, welche sechs Dioden 120 aufweist, beispielsweise wie in Fig. 1 dargestellt.

Gemäß einer Ausführungsform ist ein Halbleiterschalter 110, 112, 210, 212, 310, 312, wie er hierin beschrieben ist, ausgewählt aus einem von: einem Feldeffekttransistor, insbesondere einem Metall-Oxid-Feldeffekttransistor (MOSFET), einem Bipolartransistor, insbesondere einem Bipolartransistor mit isoliertem Gate (IGBT), etc. Gemäß einer weiteren Ausführungsform ist ein Halbleiterelement, wie es hierin beschrieben ist (beispielsweise die Halbleiterschalter 110, 112, 210, 212, 310, 312, deren inverse Dioden 114, 116, 214, 216, 314, 316 und/oder die Dioden 120) ein Leistungshalbleiter.

Gemäß einer Ausführungsform weist der Zwischenkreis 124 zwei in Reihe geschaltete Kondensatoren 126, 128 auf, wobei die Schaltvorrichtungen 106, 206, 306 jeder Phase 102, 202, 302 gemäß einer weiteren Ausführungsform zwischen die Brückenschaltung 180 und die Kondensatoren 126, 128 geschaltet sind, beispielsweise wie in Fig. 1 dargestellt. Gemäß einer Ausführungsform ist der Gleichrichter 122 in einer Neutral Boost Power Factor Correction-Topologie (NPFC-Topologie) ausgeführt, beispielsweise wie in Fig. 1 dargestellt.

Gemäß einer weiteren Ausführungsform ist jeder Phase 102, 202, 302 ein Induktor zugeordnet. Beispielsweise weist jede Phase 102, 202, 302 einen Induktor 134 auf, beispielsweise wie in Fig. 1 dargestellt. Ferner weist gemäß einer Ausführungsform jede Phase eine Strommessvorrichtung 136 auf, beispielsweise wie in Fig. 1 dargestellt. Eine Strommessvorrichtung 136 kann beispielsweise ein Hallsensor oder ein magnetoresistiver Stromsensor sein. Ferner weist jede Phase eine Spannungsmessvorrichtung (in Fig. 1 nicht dargestellt) auf zur Messung der an der betreffenden Phase 102, 202, 302 anliegenden Spannung (hierin auch als Phasenspannung bezeichnet).

Es versteht sich, dass in Fig. 1 nicht alle Elemente des Stromrichters 100 dargestellt sind. Diese nicht dargestellten Elemente und deren Funktionsweise sind jedoch den Fachleuten in verschiedensten Variationen gut bekannt und bedürfen daher hier keiner näheren Erläuterung. Die Funktionalität dieser nicht dargestellten Elemente, insbesondere der nachstehend beschriebenen Elemente können in einer Ausführungsform mindestens teilweise durch die Steuervorrichtung 108 bereitgestellt sein.

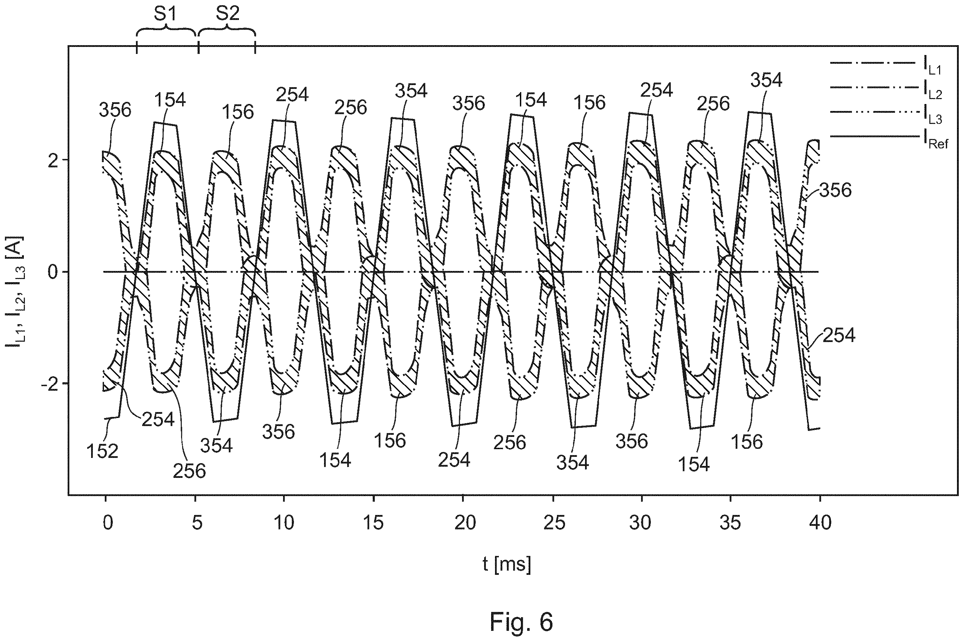

Nicht dargestellt ist beispielsweise ein Stromregler des Gleichrichters 122, der das Tastverhältnisses eines Pulsweitenmodulators regelt, um für jede Phase 102, 202, 302 einen Strom zu erzeugen, der einem gewünschten Referenzsignal für den zu erzeugenden Strom (Referenzstrom) entspricht. Die Aufgabe des Stromreglers ist es, für jede der Phasen 102, 202, 302 den aufgenommenen Strom so zu regeln, dass eine Wellenform des aufgenommenen Stromes einer Wellenform eines Stromreferenzsignals folgt, beispielsweise eines Stromreferenzsignals 152, wie es nachstehend mit Bezug auf Fig. 6 beschrieben ist. In bekannten Systemen entspricht die Wellenform des Stromreferenzsignals für eine der Phasen 102, 202, 302 der an der betreffenden Phase 102, 202, 302 anliegenden Spannung.

Ferner nicht dargestellt ist ein Zwischenkreis-Spannungsregler des Gleichrichters 122, welcher eine an dem Zwischenkreis 124 anliegende Spannung zwischen den Punkten 138 (das betreffende Potenzial ist in Fig. 1 mit +HV bezeichnet) und 140 (das betreffende Potenzial ist in Fig. 1 mit GND bezeichnet) regelt. Der Zwischenkreis-Spannungsregler bestimmt abhängig von der Zwischenkreis-Spannung und dem Eingangsstrom in der betreffenden Phase 102, 202, 302 (gemessen durch die Strommessvorrichtung 136) ein Steuersignal an den Stromregler.

Gemäß einer Ausführungsform weist die Steuervorrichtung 108 eine Prozessorvorrichtung 130 und eine Speichervorrichtung 132 auf. Gemäß einer Ausführungsform ist in der Speichervorrichtung 132 ein Computerprogrammprodukt gemäß Ausführungsformen der hierin offenbarten Gegenstände gespeichert. Gemäß einer Ausführungsform weist das Computerprogrammprodukt ein Programmelement auf, welches konfiguriert ist, um, wenn es auf der Prozessorvorrichtung 130 ausgeführt wird, die Funktionalität der Steuervorrichtung 108, wie sie hierin beschrieben ist, zu implementieren.

Gemäß einer weiteren Ausführungsform weist der Stromrichter 100 ferner einen Umrichter 142 auf, zum Betreiben eines elektrischen Verbrauchers 144, beispielsweise eines Motors, beispielsweise wie in Fig. 1 dargestellt. Gemäß einer weiteren Ausführungsform werden Halbleiterschalter 146 des Umrichters 142 ebenfalls von der Steuervorrichtung 108 gesteuert.

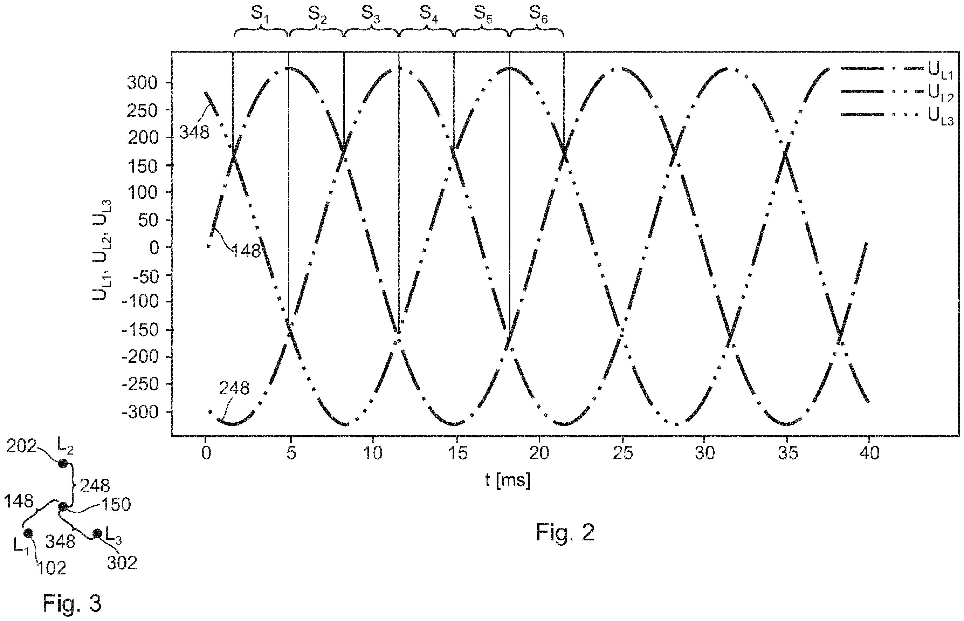

Nachfolgend wird eine beispielhafte Implementierung und Funktionsweise von Ausführungsformen der hierin offenbarten Gegenstände mit Bezug auf Fig. 2 bis Fig. 13 beschrieben.

Fig. 2 zeigt beispielhaft die gemäß einer Ausführungsform jeweils an den drei Phasen 102, 202, 302 des Stromrichters 100 aus Fig. 1 anliegende Spannung $U_{L1}$, $U_{L2}$, $U_{L3}$ (Phasenspannung) über der Zeit t bei Verwendung eines Niederspannungsnetzes als Energiequelle (beispielsweise mit einer Effektivspannung 230 V und Scheitelspannung 325 V pro Phase gegenüber einem Neutralpunkt 150, wobei die Frequenz 50 Hz beträgt). Gemäß einer Ausführungsform ist die Phasenspannung $U_{L1}$ der ersten Phase 102 mit 148 bezeichnet, die Phasenspannung $U_{L2}$ der zweiten Phase 202 mit 248 bezeichnet und die Phasenspannung $U_{L3}$ der dritten Phase 302 mit 348 bezeichnet. Bei einer Frequenz von 50 Hz ergibt sich eine Periodendauer von 20 Millisekunden (ms). In Fig. 2 sind zwei Netzspannungsperioden (d. h. in dem obigen Beispiel von 50 Hz ein Zeitraum von 40 ms) dargestellt. In Fig. 2 sind ferner sechs Sektoren S1, S2, S3, S4, S5, S6 angegeben, auf die nachfolgend Bezug genommen wird.

Fig. 3 zeigt schematisch die Phasenspannungen 148 ($U_{L1}$), 248 ($U_{L2}$), 348 ($U_{L3}$) der einzelnen Phasen 102 (L1), 202 (L2) und 302 (L3) bezüglich des Neutralpunktes 150 gemäß Ausführungsformen der hierin offenbarten Gegenstände. Anschaulich werden die bezüglich dem Neutralpunkt 150 definierten Phasenspannungen $U_{L1}$, $U_{L2}$, $U_{L3}$ auch als Sternspannungen bezeichnet. Gemäß einer Ausführungsform weisen die drei Sternspannungen (Phasenspannungen) gegeneinander eine Phasenverschiebung von 120 Grad ($2\pi/3$) auf:

$$U_{L1}(t) = \widehat{U}\sin(\omega t) \qquad\qquad (1)$$
$$U_{L2}(t) = \widehat{U}\sin\left(\omega t - \frac{2}{3}\pi\right)$$
$$U_{L3}(t) = \widehat{U}\sin\left(\omega t - \frac{4}{3}\pi\right)$$

Wie hierin erläutert, kann die Netzspannungsperiode eines dreiphasigen Systems in sechs Sektoren unterteilt werden, die nachfolgend mit S1 - S6 bezeichnet werden und deren Winkelintervalle jeweils angegeben sind.

$$S1: U_{L1}(t) > U_{L3}(t) > U_{L2}(t) \qquad \varphi_{S1} = \left[\frac{\pi}{6}; \frac{\pi}{2}\right] \qquad (2)$$

$$S2: U_{L1}(t) > U_{L2}(t) > U_{L3}(t) \qquad \varphi_{S2} = \left[\frac{\pi}{2}; \frac{5}{6}\pi\right]$$

$$S3: U_{L2}(t) > U_{L1}(t) > U_{L3}(t) \qquad \varphi_{S3} = \left[\frac{5}{6}\pi; \frac{7}{6}\pi\right]$$

$$S4: U_{L2}(t) > U_{L3}(t) > U_{L1}(t) \qquad \varphi_{S4} = \left[\frac{7}{6}\pi; \frac{3}{2}\pi\right]$$

$$S5: U_{L3}(t) > U_{L2}(t) > U_{L1}(t) \qquad \varphi_{S5} = \left[\frac{3}{2}\pi; \frac{11}{6}\pi\right]$$

$$S6: U_{L3}(t) > U_{L1}(t) > U_{L2}(t) \qquad \varphi_{S6} = \left[\frac{11}{6}\pi; \frac{\pi}{6}\right]$$

Mit anderen Worten ist beispielsweise der erste Sektor S1 gemäß einer Ausführungsform durch das Winkelintervall definiert, in welchem $U_{L1}(t) > U_{L3}(t) > U_{L2}(t)$ ist (siehe auch Fig. 2).

In einer Ausführungsform sind an den Stromrichter 100 lediglich die Phasenspannungen angeschlossen (Dreieckschaltung), beispielsweise wie in Fig. 1 dargestellt. In dieser Ausführungsform sind folglich die Spannungen zwischen zwei Phasen (hierin auch als Dreiecksspannungen bezeichnet) maßgeblich für den Stromfluss und ein Stromfluss zwischen der Energiequelle 140 und dem Stromrichter 100 erfolgt in dieser Ausführungsform nur über die drei Phasen 102, 202, 302.

Für die weitere Beschreibung der Implementierung der Pulsweitenmodulation gemäß Ausführungsformen der hierin offenbarten Gegenstände wird zunächst die Bestimmung des jeweils aktiven Sektors für die Pulsweitenmodulation beschrieben.

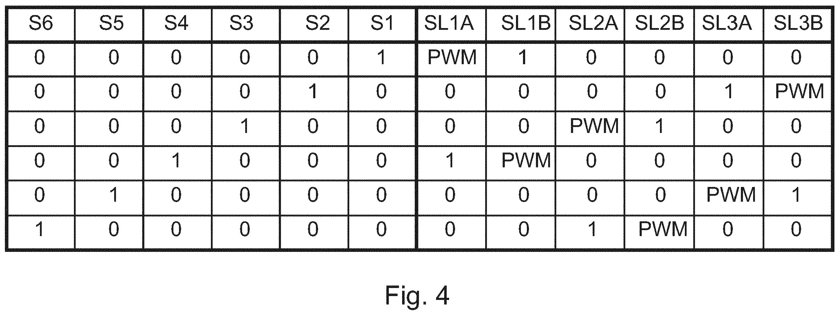

Gemäß einer Ausführungsform wird in jedem Sektor nur eine einzige Phase angesteuert. Gemäß einer Ausführungsform werden die Halbleiterschalter der Schaltvorrichtung 106, 206, 306 jeder Phase (siehe Fig. 1) angesteuert gemäß einer Zuordnung der Sektoren bzw. Winkelintervalle, wie sie in der Tabelle in Fig. 4 dargestellt ist. Mit anderen Worten definiert ein Sektor S1, S2, S3, S4, S5, S6, wie er vorstehend beschrieben ist, ein Zeitintervall gemäß Ausführungsformen der hierin offenbarten Gegenstände, in welchem nur eine einzige Phase des Stromrichters 100 aktiv angesteuert wird. In der Tabelle in Fig. 4 ist für jede Zeile der betreffende Sektor angegeben durch die Ziffer 1. Beispielsweise betrifft die erste Zeile in Fig. 4 den ersten Sektor, angegeben durch die 1 in der Spalte S1.

Gemäß der in Fig. 4 veranschaulichten Implementierung wird beispielsweise in dem ersten Sektor S1 der erste Halbleiterschalter 110 (SL1A) der ersten Phase 102 mit einem Pulsweitenmodulations-Signal (PWM-Signal) angesteuert und der zweite Halbleiterschalter 112 (SL1B) der ersten Phase 102 wird durchgeschaltet (d. h. der zweite Halbleiterschalter 112 ist über den gesamten ersten Sektor S1 elektrisch leitend, angegeben durch die Ziffer 1 in der ersten Zeile der Spalte SL1B). Hierbei wird angemerkt, dass das Durchschalten des zweiten Halbleiterschalters 112 der Steigerung der Effizienz dient, denn grundsätzlich wäre der Stromfluss auch über die Diode 116, welche dem zweiten Halbleiterschalter 112 parallel geschaltet ist möglich. Durch das Durchschalten des zweiten Halbleiterschalters 112 wird jedoch der elektrische Widerstand reduziert. Die vorstehenden Betrachtungen gelten selbstverständlich analog für die anderen Sektoren S2 bis S5.

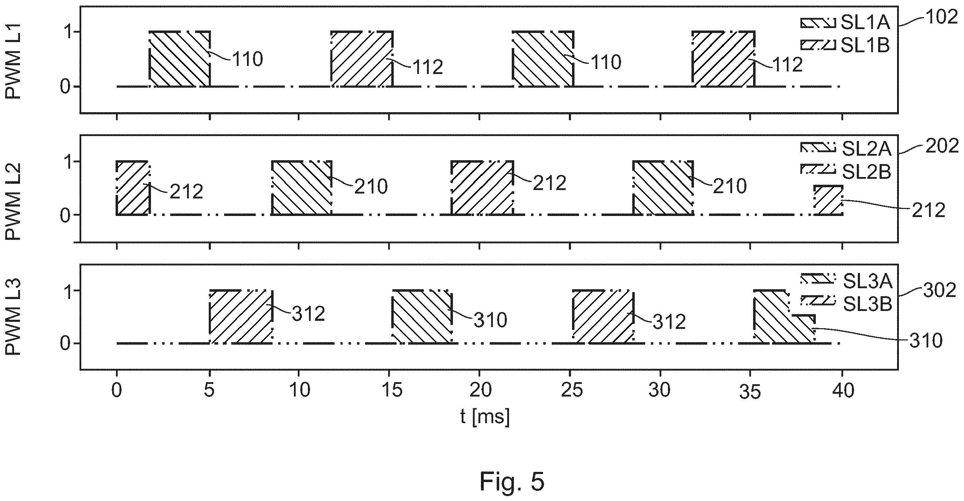

Fig. 5 zeigt über zwei Netzperioden einer Ausführungsform (40 ms) die Zeitintervalle, in denen eine Ansteuerung der einzelnen Phasen 102, 202, 302 gemäß Ausführungsformen der hierin offenbarten Gegenstände erfolgt. Fig. 5 gibt kein Tastverhältnis an, sondern lediglich, ob eine Ansteuerung mit einem PWM-Signal erfolgt (PWM L1, PWM L2, PWM L3 = 1) oder ob keine Ansteuerung mit einem PWM-Signal erfolgt (PWM L1, PWM L2, PWM L3 = 0). Bei den Zeitintervallen ist als Bezugszahl der gemäß einer Ausführungsform jeweils betreffende, mit einem PWM-Signal angesteuerte Schalter 110, 112, 210, 212, 310, 312 (vergleiche Fig. 1) angegeben.

Die Bestimmung des Tastverhältnisses für die Pulsweitenmodulation erfolgt gemäß einer Ausführungsform durch Vergleich des Phasenstroms mit einem Stromreferenzsignal. Entsprechend erfolgt in einer Ausführungsform das Ansteuern einer einzigen Phase gemäß dem Stromreferenzsignal. Gemäß einer Ausführungsform ist das Stromreferenzsignal ein (näherungsweise) trapezförmiges Signal.

Fig. 6 zeigt ein Stromreferenzsignal 152 gemäß Ausführungsformen der hierin offenbarten Gegenstände zusammen mit der zugehörigen Halbwelle 154, 254, 354 des betreffenden Phasenstroms $I_{L1}$, $I_{L2}$, $I_{L3}$ in den einzelnen Phasen 102, 202, 302.

Genauer zeigt Fig. 6 eine erste Halbwelle 154 und eine zweite Halbwelle 156 des ersten Phasenstroms $I_{L1}$ der ersten Phase 102, eine erste Halbwelle 254 und eine zweite Halbwelle 256 des zweiten Phasenstrom $I_{L2}$ der zweiten Phase 202 und eine erste Halbwelle 354 und eine zweite Halbwelle 356 des dritten Phasenstroms $I_{L3}$ der dritten Phase 302. Allgemein folgt der Phasenstrom $I_{L1}$, $I_{L2}$, $I_{L3}$ in jeder Phase 102, 202, 302 mit der ersten Halbwelle 154, 254, 354 dem Stromreferenzsignal 152, d. h. in einer Ausführungsform ist der Phasenstrom $I_{L1}$, $I_{L2}$, $I_{L3}$ näherungsweise trapezförmig.

Gemäß einer Ausführungsform erfolgt das Ansteuern der mindestens zwei Phasen des Stromrichters derart, dass für eine Spannungshalbwelle an einer Phase des Stromrichters (beispielsweise einer Halbwelle einer Phasenspannung eines Stromnetzes) in dieser Phase zwei Stromhalbwellen erzeugt werden. So sind gemäß einer Ausführungsform sind jedem Spannungsmaximum der Phasenspannung $U_{L1}$, $U_{L2}$, $U_{L3}$ zwei Strommaxima des betreffenden Phasenstromes $I_{L1}$, $I_{L2}$, $I_{L3}$ zugeordnet, beispielsweise wie aus einer Zusammenschau der Fig. 2 und der Fig. 6 ersichtlich. Auf diese Weise ist zwar ein Leistungsfaktor von 1 nicht realisierbar, allerdings sind die Oberwellenanteile immer noch gering und innerhalb der erlaubten Limits geltender Normen (beispielsweise der DIN EN 61000-3-2). Beispielsweise ist dem Maximum der Phasenspannung $U_{L1}$ in der ersten Phase 102 des Stromrichters 100 ein erstes Strommaximum (der ersten Halbwelle 154) und ein zweites Strommaximum (der zweiten Halbwelle 156) des betreffenden Phasenstromes zugeordnet. Gemäß einer Ausführungsform wird die erste Halbwelle 154 durch Ansteuerung der Schaltvorrichtung 106 der ersten Phase 102 erzeugt. Die zweite Halbwelle 156 der ersten Phase 102 ist ein Rückstrom in der ersten Phase 102, welcher durch Ansteuerung der Schaltvorrichtung 306 der dritten Phase 302 erzeugt wird. Es versteht sich, dass bei einer Dreiecksschaltung bei der Ansteuerung einer Phase (beispielsweise der dritten Phase 302) der erzeugte Strom (d. h. der durch die dritte Phase 302 von der Energiequelle 104 aufgenommene Strom $I_{L3}$) durch eine andere Phase (in der beispielhaften Implementierung durch die erste Phase 102) zurückfließen muss, um den Stromkreis zu schließen, und dadurch der Rückstrom erzeugt wird.

Gemäß einer Ausführungsform sind die beiden Halbwellen 154, 156 des Phasenstromes $I_{L1}$ der ersten Phase symmetrisch zu der zugehörigen Halbwelle der Phasenspannung $U_{L1}$, 148 der ersten Phase, d.h. symmetrisch zu den Sektoren S1 und S2 in Fig. 2. Mit anderen Worten ist eine Halbwelle der Phasenspannung $U_{L1}$, 148 der ersten Phase symmetrisch bezüglich der Sektoren S1 und S2 angeordnet und die erste Halbwelle 154 des Phasenstromes der ersten Phase erstreckt sich über den Sektor S1 und die zweite Halbwelle 156 des Phasenstromes der zweiten Phase erstreckt sich über den Sektor S2, beispielsweise wie in Fig. 6 dargestellt. Analoges gilt selbstverständlich auch für die zweite Phase 202 und die dritte Phase 302.

Gemäß einer Ausführungsform wird die Trapezform des Stromreferenzsignals 152 erzeugt durch Limitieren eines Dreieckssignals (in Fig. 6 nicht dargestellt). Das Dreiecksignal kann beispielsweise gemäß einer Ausführungsform durch einen Signalgenerator erzeugt werden, wobei die Frequenz des Dreieckssignals beispielsweise durch die Phasenspannungen in den drei Phasen 102, 202, 302 getriggert sein kann, gemäß einer weiteren Ausführungsform in einer Weise, dass die Frequenz des Dreiecksignal gleich der dreifachen Frequenz der Phasenspannungen $U_{L1}$, $U_{L2}$, $U_{L3}$ ist.

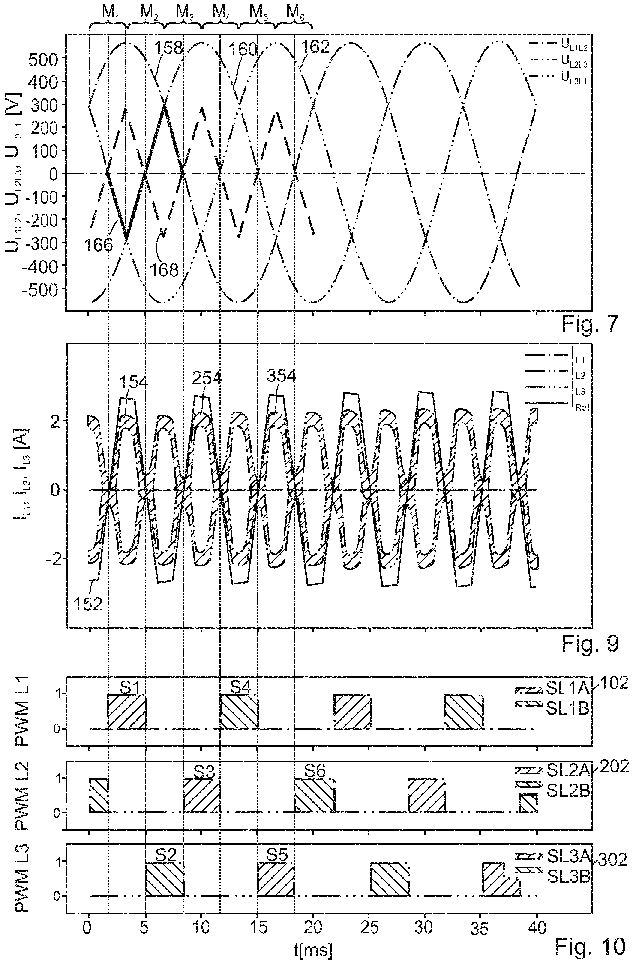

Gemäß einer weiteren Ausführungsform wird das Dreiecksignal direkt aus den Dreieckspannungen erzeugt (beispielsweise indem sich der Signalverlauf des Dreiecksignals abschnittsweise aus dem Signalverlauf der Dreieckspannungen zusammensetzt), beispielsweise wie dies mit Bezug auf Fig. 7 beschrieben ist.

Fig. 7 zeigt den zeitlichen Verlauf der Dreieckspannungen $U_{L1L2}$, $U_{L2L3}$, $U_{L3L1}$ gemäß Ausführungsformen der hierin offenbarten Gegenstände.

Genauer zeigt Fig. 7 den zeitlichen Verlauf einer ersten Dreieckspannung 158 ($U_{L1L2}$) zwischen der ersten Phase 102 und der zweiten Phase 202, einer zweiten Dreieckspannung 160 ($U_{L2L3}$) zwischen der zweiten Phase 202 und der dritten Phase 302 und einer dritten Dreieckspannung 162 ($U_{L3L1}$) zwischen der dritten Phase 302 und der ersten Phase 102.

Folglich sind die Dreieckspannungen wie folgt definiert:

$$U_{L1L2}(t) = \widehat{U}\sqrt{3}\sin\left(\omega t + \frac{1}{6}\pi\right) \qquad (3)$$

$$U_{L2L3}(t) = \widehat{U}\sqrt{3}\sin\left(\omega t - \frac{1}{2}\pi\right)$$

$$U_{L3L1}(t) = \widehat{U}\sqrt{3}\sin\left(\omega t - \frac{7}{6}\pi\right)$$

Die Dreieckspannungen lassen sich ebenfalls in Sektoren unterteilen, in welchen eine der Dreieckspannungen stets größer ist als die anderen beiden Dreieckspannungen: Gemäß einer Ausführungsform sind diese Sektoren und deren Winkelintervalle wie folgt:

$$M1: U_{L1L2}(t) > U_{L3L1}(t) > U_{L2L3}(t) \qquad \varphi_{M1} = \left[0; \frac{1}{3}\pi\right] \qquad (4)$$

$$M2: U_{L1L2}(t) > U_{L3L1}(t) > U_{L2L3}(t) \qquad \varphi_{M2} = \left[\frac{1}{3}\pi; \frac{2}{3}\pi\right]$$

$$M3: U_{L2L3}(t) > U_{L1L2}(t) > U_{L3L1}(t) \qquad \varphi_{M3} = \left[\frac{2}{3}\pi; \pi\right]$$

$$M4: U_{L2L3}(t) > U_{L3L1}(t) > U_{L1L2}(t) \qquad \varphi_{M4} = \left[\pi; \frac{4}{3}\pi\right]$$

$$M5: U_{L3L1}(t) > U_{L2L3}(t) > U_{L1L2}(t) \qquad \varphi_{M5} = \left[\frac{4}{3}\pi; \frac{5}{3}\pi\right]$$

$$M6: U_{L3L1}(t) > U_{L1L2}(t) > U_{L2L3}(t) \qquad \varphi_{M6} = \left[\frac{5}{3}\pi; 2\pi\right]$$

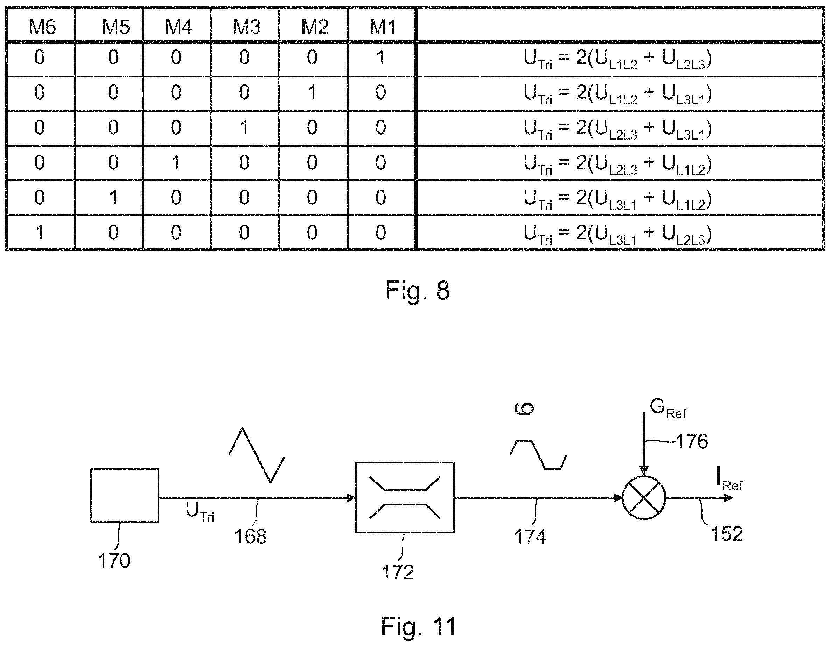

Gemäß einer Ausführungsform wird das Dreiecksignal, in Fig. 7 mit 168 bezeichnet, aus den Dreieckspannungen $U_{L1L2}$, $U_{L2L3}$, $U_{L3L1}$ erzeugt. Beispielsweise wird gemäß einer Ausführungsform das Dreiecksignal $U_{Tri}$ für die sechs Sektoren M1 bis M6 gemäß einer Tabelle definiert, die in Fig. 8 dargestellt ist. Beispielsweise ist für den ersten Sektor M1 der Dreieckspannungen das Dreiecksignal $U_{Tri}$ definiert durch $U_{Tri} = 2\,(U_{L1L2} + U_{L2L3})$, d.h. durch die 2-fache Summe der höchsten Spannung $U_{L1L2}$ und der niedrigsten Spannung $U_{L2L3}$ in dem betreffenden Sektor (in dem Beispiel dem Sektor M1), beispielsweise wie in Fig. 8 angegeben. Das in der Tabelle in Fig. 8 definierte Signal $U_{Tri}$ kann mathematisch wie folgt dargestellt werden:

$$U_{Tri}(t) = \frac{8\sqrt{3}}{\pi^2}\hat{U}\sum_{n=1}^{\infty}\frac{\cos((2n-1)3\omega t)}{(2n-1)^2} \qquad (5)$$

Weitere Verfahren zur Erzeugung des Dreiecksignals sind ebenfalls möglich. Beispielsweise wird gemäß einer weiteren Ausführungsform ein inverses Dreiecksignal 166 durch den Spannungsverlauf der betragsmäßig jeweils kleinsten Dreieckspannung definiert, beispielsweise wie in Fig. 7 für eine Periode (des inversen Dreieckssignals) durch eine Linie mit größerer Linienbreite dargestellt. Gemäß einer Ausführungsform wird das Dreiecksignal 168 durch Invertieren des inversen Dreiecksignals 166 erzeugt.

Allgemein wird zum Erzeugen des Stromreferenzsignals 152 gemäß Ausführungsformen der hierin offenbarten Gegenstände zunächst ein Dreiecksignal (hierin allgemein auch als erstes Signal bezeichnet) erzeugt, dessen fundamentale Frequenz dreimal so hoch ist wie die Frequenz der Dreieckspannungen. Gemäß einer weiteren Ausführungsform ist das Dreiecksignal in Phase mit den Dreieckspannungen. Beispielsweise ist gemäß einer Ausführungsform einem Maximum von jeder der drei Dreieckspannungen ein Maximum des Dreieckssignals 168 zugeordnet und mit diesem in Phase, beispielsweise wie in Fig. 7 dargestellt. Folglich gibt es für jedes Maximum von einer der Dreieckspannungen 158, 160, 162 ein Maximum der zugehörigen Halbwelle 154, 254, 354 des betreffenden Phasenstromes $I_{L1}$, $I_{L2}$, $I_{L3}$. Wie mit Bezug auf Fig. 6 beschrieben, gibt es ferner ein Maximum einer weiteren Halbwelle 156, 256, 356 des Phasenstromes $I_{L1}$, $I_{L2}$, $I_{L3}$ gleicher Polarität, welches verursacht ist durch den Rückstrom eines Phasenstromes $I_{L3}$, $I_{L1}$, $I_{L2}$ in einer anderen Phase. Wie erläutert ist dadurch der Leistungsfaktor kleiner als 1, allerdings wird dennoch ein niedriger Oberwellenanteil erzielt. Nachdem die Dreieckspannungen (z.B. die erste Dreieckspannung ($U_{L1L2}$) gegenüber den Phasenspannungen (z. B. gegenüber der ersten Phasenspannung $U_{L1}$) um $-\pi/6$ verschoben ist (siehe Gleichungen (1) und (3)), ergibt sich aus der vorstehend beschriebenen Phasenbeziehung (wonach das Dreiecksignal in Phase mit den Dreieckspannungen ist) die Phasenbeziehung zwischen Phasenstrom und Phasenspannung, wie sie oben mit Bezug auf Fig. 6 beschrieben ist.

Fig. 9 zeigt die Phasenströme aus Fig. 6 gemäß einer Ausführungsform im Kontext (insbesondere mit einer gemeinsamen Zeitachse) mit den Dreieckspannungen aus Fig. 7. Gemäß einer Ausführungsform ist das Maximum der ersten Dreieckspannung 158 in Phase mit dem Maximum der ersten Halbwelle 154 des Phasenstromes $I_{L1}$ in der ersten Phase 102, das Maximum der zweiten Dreieckspannung 160 ist in Phase mit dem Maximum der ersten Halbwelle 254 des Phasenstromes $I_{L2}$ in der zweiten Phase 202 und das Maximum der dritten Dreieckspannung 162 ist in Phase mit dem Maximum der ersten Halbwelle 354 des Phasenstromes $I_{L3}$ in der dritten Phase 302, beispielsweise wie aus der Zusammenschau von Fig. 7 und Fig. 9 ersichtlich.

Fig. 10 zeigt die Zeitintervalle für die Pulsweitenmodulation der drei Phasen 102, 202, 302 aus Fig. 5 gemäß einer Ausführungsform im Kontext (insbesondere mit einer gemeinsamen Zeitachse) mit den Dreieckspannungen aus Fig. 7. In Fig. 10 sind ferner die zugehörigen Sektoren S1, S2, S3, S4, S5, S6 für die Pulsweitenmodulation angegeben (siehe auch Fig. 2).

Fig. 11 veranschaulicht das Erzeugen eines Stromreferenzsignals gemäß Ausführungsformen der hierin offenbarten Gegenstände. Gemäß einer Ausführungsform wird zunächst das Dreiecksignal 168 (allgemein auch als erstes Signal bezeichnet) erzeugt, angegeben bei 170. Die Erzeugung 170 des Dreiecksignals 168 kann beispielsweise gemäß einer oder mehrerer der hierin offenbarten Ausführungsformen erfolgen. Gemäß einer Ausführungsform wird das Dreiecksignal 168 limitiert (angegeben bei 172 in Fig. 11), d. h. gemäß einer Ausführungsform in seinen maximalen Signalwerten begrenzt zum Erzeugen des Trapezsignals 174 (allgemein auch als zweites Signal bezeichnet). Das Trapezsignal 174 wird gemäß einer Ausführungsform mit einer Stellgröße 176 des Zwischenkreis-Spannungsreglers multipliziert, zum Erzeugen des Stromreferenzsignals 152, beispielsweise wie in Fig. 11 dargestellt.

Die mit Bezug auf die Figuren 2 bis 11 beschriebenen Ausführungsformen betreffen einen ersten Betriebsmodus des Stromrichters 100 aus Fig. 1, wonach nur jeweils eine einzige der drei Phasen zum Aufnehmen von elektrischer Energie gleichzeitig angesteuert wird.

Gemäß einer weiteren Ausführungsform weist ein Verfahren das Betreiben des Stromrichters 100 in dem ersten Betriebsmodus auf. Gemäß einer weiteren Ausführungsform weist das Verfahren einen Betrieb des Stromrichters 100 in einem zweiten Betriebsmodus auf, wobei in dem zweiten Betriebsmodus zwei oder mehr Phasen (beispielsweise alle drei Phasen des dreiphasigen Stromrichters) zum Aufnehmen elektrischer Energie von der Energiequelle gleichzeitig angesteuert werden.

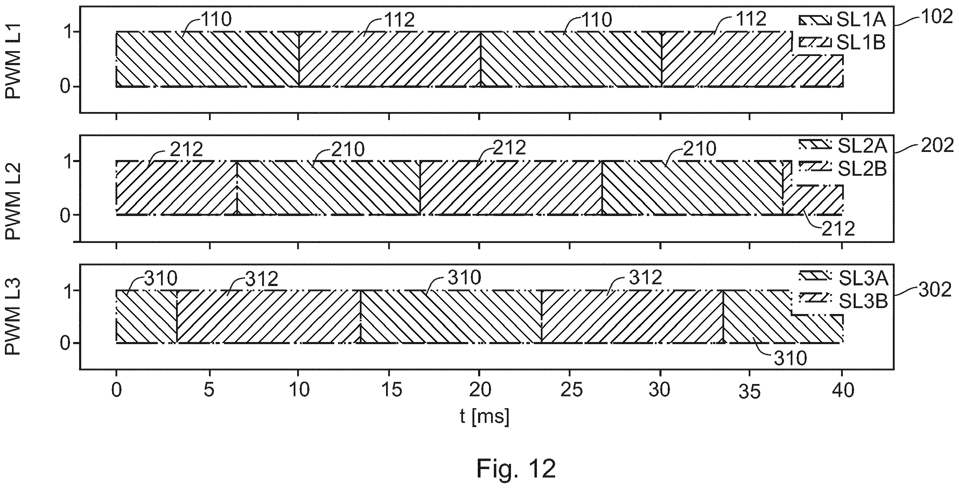

Fig. 12 zeigt über zwei Netzperioden (40 ms) die Zeitintervalle, in denen eine Ansteuerung der einzelnen Phasen 102, 202, 302 in einem zweiten Betriebsmodus gemäß Ausführungsformen der hierin offenbarten Gegenstände erfolgt. Bei den Zeitintervallen ist gemäß einer Ausführungsform jeweils der betreffende, mit einem PWM-Signal angesteuerte Schalter 110, 112, 210, 212, 310, 312 (vergleiche Fig. 1) angegeben. Gemäß einer Ausführungsform werden die drei Phasen kontinuierlich mit einem PWM-Signal angesteuert, beispielsweise wie in Fig. 12 dargestellt.

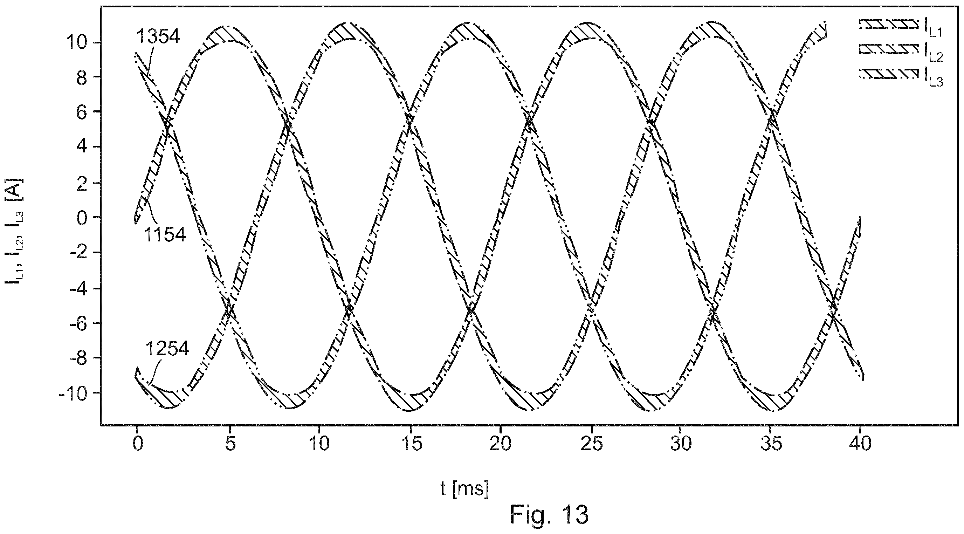

Fig. 13. zeigt über zwei Netzperioden (40 ms) den Phasenstrom 1154 ($I_{L1}$), 1254 ($I_{L2}$), 1354 ($I_{L3}$) in den einzelnen Phasen 102, 202, 302 in dem zweiten Betriebsmodus. Genauer zeigt Fig. 13 einen ersten Phasenstrom 1154 der ersten Phase 102, einen zweiten Phasenstrom 1254 der zweiten Phase 202 und einen dritten Phasenstrom 1354 der dritten Phase 302. Durch die kontinuierliche Ansteuerung aller drei Phasen wird gemäß einer Ausführungsform in jeder der drei Phasen 102, 202, 302 ein Phasenstrom erzielt, der einen Leistungsfaktor nahe 1 sowie einen geringen Oberwellenanteil aufweist.

Es sollte angemerkt werden, dass ein Stromrichter, wie er hierin beschrieben ist, nicht auf die dezidierten Entitäten beschränkt ist, wie sie in einigen Ausführungsformen beschrieben sind. Vielmehr können die hierin offenbarten Gegenstände auf zahlreiche Weisen implementiert werden, während sie immer noch die offenbarte spezifische Funktionalität liefern. Ferner sollte angemerkt werden, dass, obwohl in einigen Ausführungsformen aus Gründen der Anschaulichkeit auf ein Dreiecksignal und ein Trapezsignal Bezug genommen wird, diese Ausführungsformen ebenso für das entsprechende, hierin offenbarte erste Signal und das hierin offenbarte zweite Signal anwendbar bzw. darauf übertragbar sind. Beispielsweise kann der Begriff "Dreiecksignal" (oder "inverses Dreiecksignal") durch den Begriff "erstes Signal" (oder "inverses erstes Signal") ersetzt werden.

Gemäß Ausführungsformen der hierin offenbarten Gegenstände kann jede geeignete Entität (z. B. Komponenten, Einheiten und Vorrichtungen, etc.) zumindest teilweise in der Form von entsprechenden Computerprogrammen bereitgestellt sein, welche es einer Prozessorvorrichtung ermöglichen, die Funktionalität der entsprechenden Entität zu liefern, wie sie hierin beschrieben ist. Gemäß anderer Ausführungsformen kann jede geeignete Entität, wie sie hierin beschrieben ist, in Hardware bereitgestellt sein. Gemäß anderer, Hybrid-Ausführungsformen können einige Entitäten in Software bereitgestellt sein, während andere Entitäten in Hardware bereitgestellt sind.

Es wird darauf hingewiesen, dass jede hierin offenbarte Entität (z. B. Komponenten, Einheiten, Vorrichtungen, Elemente, Schalter, etc.) nicht auf eine dezidierte Entität beschränkt ist, wie sie in einigen Ausführungsformen beschrieben sind. Vielmehr können die hierin beschriebenen Gegenstände auf verschiedene Weisen mit verschiedener Granularität auf Vorrichtungs-Niveau oder auf Softwaremodul-Niveau bereitgestellt sein, während sie immer noch die angegebene Funktionalität liefern. Ferner sollte angemerkt werden, dass gemäß Ausführungsformen eine separate Entität (z. B. ein Softwaremodul, ein Hardwaremodul oder ein Hybridmodul) für jede der hierin offenbarten Funktionen bereitgestellt sein kann. Gemäß anderer Ausführungsformen kann eine Entität (z. B. ein Softwaremodul, in Hardwaremodul oder ein Hybridmodul) konfiguriert sein, um zwei oder mehr Funktionen, wie sie hierin beschrieben sind, zu liefern. Gemäß nochmals anderen Ausführungsformen können zwei oder mehr Entitäten (z. B. Komponenten, Einheiten und Vorrichtungen, Elemente, Schalter, etc.) konfiguriert sein, um zusammen eine Funktion, wie sie hierin beschrieben ist, zu liefern.

Gemäß einer Ausführungsform enthält die Steuervorrichtung eine Prozessorvorrichtung, welche mindestens einen Prozessor aufweist zum Ausführen von mindestens einem Programmelement, welches einem entsprechenden Softwaremodul entsprechen kann.

Es wird darauf hingewiesen, dass die hierin beschriebenen Implementierungen lediglich eine beschränkte Auswahl an möglichen Kombinationen von Ausführungsformen der vorliegenden Offenbarung darstellen. So ist es allgemein möglich, die Merkmale verschiedener Ausführungsformen in geeigneter Weise miteinander zu kombinieren, so dass für den Fachmann mit den hier explizit offenbarten Ausführungsformen eine Vielzahl von Kombinationen verschiedener Ausführungsformen als offenbart anzusehen sind. Ferner sollte erwähnt werden, dass Begriffe wie "ein" oder "eines" eine Mehrzahl nicht ausschließen. Begriffe wie "enthaltend" oder "aufweisend" schließen weitere Merkmale oder Verfahrensschritte nicht aus. Folglich steht gemäß einer Ausführungsform der Begriff "aufweisend" oder "enthaltend" für "unter anderem aufweisend". Gemäß einer weiteren Ausführungsform steht der Begriff "aufweisend" oder "enthaltend" für "bestehend aus". Gemäß einer Ausführungsform umfasst der Begriff "eingerichtet für" unter anderem die Bedeutung "konfiguriert, um".

Der Begriff "insbesondere" bezeichnet hierin allgemein optionale Merkmale.

Der Ausdruck "A und/oder B" umfasst in üblicher Weise stets "nur A", "nur B" sowie auch "A und B". In einem Ausdruck, der auf eine Auflistung von Merkmalen Bezug nimmt, umfasst "mindestens eines" stets die einzelnen Merkmale sowie beliebige Kombinationen der Merkmale. Beispielsweise umfasst der Ausdruck "mindestens eines der Merkmale A und B" das Merkmal "nur A", "nur B", sowie "A und B". Analog umfasst auch der Ausdruck "mindestens eines der Merkmale A oder B" das Merkmal "nur A", "nur B", sowie "A und B". Analog umfasst auch der Ausdruck "mindestens eines der Merkmale A, B" das Merkmal "nur A", "nur B", sowie "A und B".

Es sollte auch angemerkt werden, dass Bezugszeichen in den Ansprüchen nicht als den Umfang der Ansprüche einschränkend ausgelegt werden sollten. Ferner sollte angemerkt werden, dass Bezugszeichen in der Beschreibung und die Bezugnahme der Beschreibung auf die Zeichnungen nicht als den Umfang der Beschreibung einschränkend ausgelegt werden sollen. Vielmehr veranschaulichen die Zeichnungen nur eine exemplarische Implementierung einer bestimmten Kombination von mehreren Ausführungsformen der hierin offenbarten Gegenstände, wobei jede andere Kombination von Ausführungsformen ebenso möglich und mit dieser Anmeldung als offenbart anzusehen ist.

Zusammenfassend bleibt festzustellen:

Offenbart wird ein mehrphasiger Stromrichter 100 und ein Verfahren zum Betreiben eines mehrphasigen Stromrichters 100, wobei der Stromrichter 100 mindestens zwei Phasen 102, 202, 302 aufweist, von denen jede Phase 102, 202, 302 ansteuerbar ist zum Aufnehmen von elektrischer Energie von einer Energiequelle 104, das Verfahren aufweisend: gleichzeitiges Ansteuern von nur jeweils einer einzigen Phase 102, 202, 302 der mindestens zwei Phasen 102, 202, 302 des Stromrichters 100 zum Aufnehmen von elektrischer Energie von der Energiequelle 104. Ferner wird ein entsprechendes Computerprogrammprodukt offenbart.

BEZUGSZIFFERNLISTE

100 Stromrichter
102 erste Phase des Stromrichters
104 Energiequelle
106 erste Schaltvorrichtung
108 Steuervorrichtung
110 erster Halbleiterschalter von 106
112 zweiter Halbleiterschalter von 106
114 Diode zu 110
116 Diode zu 112
118 Brückenschaltung
120 Diode von 118
122 Gleichrichter
124 Zwischenkreis
126 Kondensator von 124
128 Kondensator von 124
130 Prozessorvorrichtung
132 Speichervorrichtung
134 Induktor
136 Strommessvorrichtung
137 Spannungsmessvorrichtung
138 Potenzialpunkt +HV des Zwischenkreises
140 Potenzialpunkt GND des Zwischenkreises
142 Umrichter
144 Verbraucher
146 Halbleiterschalter von 142

148 Phasenspannung der ersten Phase

150 Neutralpunkt

152 Stromreferenzsignal

154 erste Halbwelle des ersten Phasenstromes $I_{L1}$

156 zweite Halbwelle des ersten Phasenstromes $I_{L1}$

158 erste Dreieckspannung

160 zweite Dreieckspannung

162 dritte Dreieckspannung

166 inverses erstes Signal/inverses Dreiecksignal

168 erstes Signal/Dreiecksignal

170 Erzeugung des Dreiecksignals 168

172 Erzeugung des Trapezsignals 174

174 Trapezsignal

176 Stellgröße

202 zweite Phase des Stromrichters

206 zweite Schaltvorrichtung

210 erster Halbleiterschalter von 206

212 zweiter Halbleiterschalter von 206

214 Diode zu 210

216 Diode zu 212

248 Phasenspannung der zweiten Phase

254 erste Halbwelle des Phasenstromes $I_{L2}$

256 zweite Halbwelle des Phasenstromes $I_{L2}$

302 dritte Phase des Stromrichters

306 dritte Schaltvorrichtung

310 erster Halbleiterschalter von 306

312 zweiter Halbleiterschalter von 306

314 Diode zu 310

316 Diode zu 312

348 Phasenspannung der dritten Phase

354 erste Halbwelle des Phasenstromes $I_{L3}$

356 zweite Halbwelle des Phasenstromes $I_{L3}$

M1, M2, M3, M4, M5, M6: Sektoren der Dreieckspannungen

S1, S2, S3, S4, S5, S6: Sektoren der Phasenspannungen/Phasenströme

**Patentansprüche**

1. Verfahren zum Betreiben eines mehrphasigen Stromrichters (100), wobei der Stromrichter (100) mindestens zwei Phasen (102, 202, 302) aufweist, von denen jede Phase (102, 202, 302) ansteuerbar ist zum Aufnehmen von elektrischer Energie von einer Energiequelle (104), das Verfahren aufweisend:
gleichzeitiges Ansteuern von nur jeweils einer einzigen Phase (102, 202, 302) der mindestens zwei Phasen (102, 202, 302) des Stromrichters (100) zum Aufnehmen von elektrischer Energie von der Energiequelle (104).

2. Verfahren nach Anspruch 1,

   wobei die mindestens zwei Phasen (102, 202, 302) des Stromrichters (100) eine erste Phase (102) und eine zweite Phase (202) aufweisen, das Verfahren ferner aufweisend
   Betreiben des Stromrichters (100) in einem ersten Betriebsmodus, welcher ein erstes Zeitintervall und ein zweites Zeitintervall umfasst;
   Ansteuern von nur der ersten Phase (102) während des ersten Zeitintervalls; und Ansteuern von nur der zweiten Phase (202) während des zweiten Zeitintervalls.

3. Verfahren nach irgendeinem der Ansprüche 1 oder 2,

   wobei das Verfahren einen Betrieb in einem zweiten Betriebsmodus umfasst; und
   wobei in dem zweiten Betriebsmodus zwei oder mehr Phasen (102, 202, 302) des Stromrichters (100) zum Aufnehmen elektrischer Energie von Energiequelle (104) gleichzeitig angesteuert werden.

4. Verfahren nach Anspruch 3,
wobei der Stromrichter (100) in dem ersten Betriebsmodus eine erste elektrische Leistung von der Energiequelle (104) aufnimmt und der Stromrichter (100) in dem zweiten Betriebsmodus eine zweite elektrische Leistung von der Energiequelle (104) aufnimmt, wobei die erste elektrische Leistung kleiner als die zweite elektrische Leistung ist.

5. Verfahren nach irgendeinem der Ansprüche 1 bis 4, ferner aufweisend mindestens eines von dem folgenden:

   das Ansteuern der mindestens zwei Phasen (102, 202, 302) des Stromrichters (100) erfolgt derart, dass in jeder angesteuerten Phase (102, 202, 302) für eine Halbwelle einer an der Phase (102, 202, 302) anliegenden Spannung zwei Halbwellen (154, 156 254, 256, 354, 356) eines Stromes erzeugt werden, insbesondere wobei von den zwei Halbwellen des Stromes eine erste Halbwelle (154, 254, 354) durch das Ansteuern der Phase (102, 202, 302) erzeugt wird und eine zweite Halbwelle (156, 256, 356) durch ein Ansteuern einer anderen der mindestens zwei Phasen (102, 202, 302) erzeugt wird;
   die mindestens zwei Phasen (102, 202, 302) sind drei Phasen (102, 202, 302) und der mehrphasige Stromrichter (100) ist ein dreiphasiger Stromrichter (100).

6. Verfahren nach irgendeinem der Ansprüche 1 bis 5,
wobei während des Aufnehmens elektrischer Energie von der Energiequelle (104) eine Leistungsfaktorkorrektur vorgenommen wird.

7. Verfahren nach irgendeinem der Ansprüche 1 bis 6,
wobei das Ansteuern der betreffenden Phase (102, 202, 302) des Stromrichters (100) durch Pulsweitenmodulation einer Schaltvorrichtung (106, 206, 306) der Phase (102, 202, 302) erfolgt.

8. Verfahren nach irgendeinem der Ansprüche 1 bis 7,

   wobei das Ansteuern einer Phase (102, 202, 302) derart erfolgt, dass ein von der Energiequelle (104) durch die angesteuerte Phase (102, 202, 302) aufgenommener Strom in seinem zeitlichen Verlauf trapezförmig ist; und/oder
   wobei das Ansteuern von einer der Phasen (102, 202, 302) mit einer Frequenz erfolgt, die höher ist als eine Grundfrequenz der an der Phase anliegenden Spannung.

9. Verfahren nach irgendeinem der Ansprüche 1 bis 8, wobei der Stromrichter (100) ein Gleichrichter ist und/oder die Energiequelle (104) ein Stromnetz ist.

10. Stromrichter (100) aufweisend:

    mindestens zwei Phasen (102, 202, 302), von denen jede ansteuerbar ist zum Aufnehmen elektrischer Energie von einer Energiequelle (104); und
    eine Steuervorrichtung (108), welche konfiguriert ist, um in einem ersten Betriebsmodus nur jeweils eine einzige Phase (102, 202, 302) des Stromrichters (100) zum Aufnehmen elektrischer Energie von der Energiequelle (104) gleichzeitig anzusteuern.

11. Stromrichter (100) nach Anspruch 10,

    wobei jede Phase des Stromrichters (100) eine Schaltvorrichtung (106, 206, 306) aufweist, welche ansteuerbar ist, um elektrische Energie von der Energiequelle (104) in die betreffende Phase des Stromrichters (100) aufzunehmen; und
    wobei die Steuervorrichtung (108) betreibbar ist, um das Ansteuern von einer der Phasen (102, 202, 302) des Stromrichters (100) durch ein Ansteuern der Schaltvorrichtung (106, 206, 306) der betreffenden Phase durchzuführen.

12. Stromrichter (100) nach irgendeinem der Ansprüche 10 oder 11,

    wobei der Stromrichter (100) in einem zweiten Betriebsmodus betreibbar ist; und
    wobei die Steuervorrichtung (108) konfiguriert ist, um in dem zweiten Betriebsmodus zwei oder mehr Phasen (102, 202, 302) des Stromrichters (100) gleichzeitig zum Aufnehmen elektrischer Energie von der Energiequelle (104) anzusteuern.

**13.** Stromrichter (100) nach irgendeinem der Ansprüche 10 bis 12, wobei

der erste Betriebsmodus ein erstes Zeitintervall und ein zweites Zeitintervall umfasst;
der Stromrichter (100) eine erste Phase (102) und eine zweite Phase (202) aufweist; die Steuervorrichtung (108) konfiguriert ist, um in dem ersten Zeitintervall nur die erste Phase (102) des Stromrichters (100) zum Aufnehmen von elektrischer Energie von der Energiequelle (104) anzusteuern; und
die Steuervorrichtung (108) konfiguriert ist, um in dem zweiten Zeitintervall nur die zweite Phase (202) des Stromrichters (100) zum Aufnehmen von elektrischer Energie von der Energiequelle (104) anzusteuern.

**14.** Stromrichter (100) nach irgendeinem der Ansprüche 10 bis 13, ferner aufweisend mindestens eines der folgenden Merkmale:

der Stromrichter (100) arbeitet in dem ersten Betriebsmodus in einem Teillastbetrieb;
der Stromrichter (100) ist ein dreiphasiger Frequenzumrichter mit aktiver Leistungsfaktorkorrektur.

**15.** Computerprogrammprodukt aufweisend ein Programmelement, welches konfiguriert ist, um, wenn es auf einer Prozessorvorrichtung (130) ausgeführt wird, ein Verfahren gemäß einem der Ansprüche 1 bis 9 zu steuern.

Fig. 1

EP 4 618 385 A1

Fig. 2

Fig. 3

| S1 | S2 | S3 | S4 | S5 | S6 | SL1A | SL1B | SL2A | SL2B | SL3A | SL3B |
|----|----|----|----|----|----|------|------|------|------|------|------|
| 1 | 0 | 0 | 0 | 0 | 0 | PWM | 1 | 0 | 0 | 0 | 0 |
| 0 | 1 | 0 | 0 | 0 | 0 | 0 | 0 | 0 | 0 | 1 | PWM |
| 0 | 0 | 1 | 0 | 0 | 0 | 0 | PWM | PWM | 1 | 0 | 0 |
| 0 | 0 | 0 | 1 | 0 | 0 | 1 | 0 | 0 | 0 | 0 | 0 |
| 0 | 0 | 0 | 0 | 1 | 0 | 0 | 0 | 0 | 0 | PWM | 1 |
| 0 | 0 | 0 | 0 | 0 | 1 | 0 | 0 | 1 | PWM | 0 | 0 |

Fig. 4

Fig. 5

EP 4 618 385 A1

Fig. 6

EP 4 618 385 A1

| M1 | M2 | M3 | M4 | M5 | M6 | |
|---|---|---|---|---|---|---|
| 1 | 0 | 0 | 0 | 0 | 0 | $U_{Tri} = 2(U_{L1L2} + U_{L2L3})$ |
| 0 | 1 | 0 | 0 | 0 | 0 | $U_{Tri} = 2(U_{L1L2} + U_{L3L1})$ |
| 0 | 0 | 1 | 0 | 0 | 0 | $U_{Tri} = 2(U_{L2L3} + U_{L3L1})$ |
| 0 | 0 | 0 | 1 | 0 | 0 | $U_{Tri} = 2(U_{L2L3} + U_{L1L2})$ |
| 0 | 0 | 0 | 0 | 1 | 0 | $U_{Tri} = 2(U_{L3L1} + U_{L1L2})$ |
| 0 | 0 | 0 | 0 | 0 | 1 | $U_{Tri} = 2(U_{L3L1} + U_{L2L3})$ |

Fig. 8

Fig. 11

Fig. 7

Fig. 9

Fig. 10

Fig. 12

EP 4 618 385 A1

Fig. 13

**EUROPÄISCHER RECHERCHENBERICHT**

Nummer der Anmeldung

EP 24 16 2815

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | H. U. Giersch ET AL: "Elektrotechnik f?r Fachschulen" In: "Elektrotechnik f?r Fachschulen", 1. Januar 1998 (1998-01-01), Springer, XP055527378, Seiten 10-103, * Abbildung 1.105 * ----- | 1 | INV. H02M1/00 H02M1/42 H02M7/487 |
| X | US 2020/295668 A1 (BORTIS DOMINIK [CH] ET AL) 17. September 2020 (2020-09-17) * Abbildungen 3,13,15,16,6 * * Absätze [0042], [0076], [0017] * ----- | 1-15 | |
| X | WO 2022/254746 A1 (HITACHI INDUSTRY EQUIPMENT SYSTEMS CO LTD [JP]) 8. Dezember 2022 (2022-12-08) * Abbildungen 1,2 * * Absatz [0042] * ----- | 1 | |
| X | EP 2 615 732 A1 (HITACHI IND EQUIPMENT SYS [JP]) 17. Juli 2013 (2013-07-17) * Abbildungen 1,7 * ----- | 1 | **RECHERCHIERTE SACHGEBIETE (IPC)** H02M |
| A | US 2023/059776 A1 (PIAO CHENGZHU [US] ET AL) 23. Februar 2023 (2023-02-23) * Abbildungen 2,3 * * Absatz [0030] * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 13. August 2024 | Gotzig, Bernhard |

**EP 4 618 385 A1**

| Im Recherchenbericht angeführtes Patentdokument | Datum der Veröffentlichung | Mitglied(er) der Patentfamilie | Datum der Veröffentlichung |
|---|---|---|---|
| US 2020295668 A1 | 17-09-2020 | CN 111697852 A | 22-09-2020 |
|  |  | EP 3709489 A1 | 16-09-2020 |
|  |  | EP 4325705 A2 | 21-02-2024 |
|  |  | US 2020295668 A1 | 17-09-2020 |
| WO 2022254746 A1 | 08-12-2022 | JP 2022184401 A | 13-12-2022 |
|  |  | WO 2022254746 A1 | 08-12-2022 |
| EP 2615732 A1 | 17-07-2013 | CN 103098362 A | 08-05-2013 |
|  |  | EP 2615732 A1 | 17-07-2013 |
|  |  | JP 5557660 B2 | 23-07-2014 |
|  |  | JP 2012060801 A | 22-03-2012 |
|  |  | WO 2012032910 A1 | 15-03-2012 |
| US 2023059776 A1 | 23-02-2023 | CN 115708305 A | 21-02-2023 |
|  |  | EP 4138289 A1 | 22-02-2023 |
|  |  | US 2023059776 A1 | 23-02-2023 |

EPO FORM P0461